(19) Europäisches Patentamt
European Patent Office
Office européen des brevets

(11) EP 2 942 884 B1

(12) FASCICULE DE BREVET EUROPEEN

(45) Date de publication et mention
de la délivrance du brevet:
**04.07.2018 Bulletin 2018/27**

(51) Int Cl.:
***H04B 10/116*** (2013.01)

(21) Numéro de dépôt: **15166432.3**

(22) Date de dépôt: **05.05.2015**

(54) **OPTIMISATION DU DEBIT DANS UN SYSTEME LI-FI**

OPTIMIERUNG DES DURCHSATZES IN EINEM LI-FI-SYSTEM

BANDWIDTH OPTIMISATION IN A LI-FI SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.05.2014 FR 1454140**

(43) Date de publication de la demande:
**11.11.2015 Bulletin 2015/46**

(73) Titulaire: **Commissariat à l'Énergie Atomique
et aux Énergies Alternatives
75015 Paris (FR)**

(72) Inventeurs:
• **Bialic, Emilie**
**69330 MEYZIEU (FR)**
• **Nguyen, Dinh-Chuong**
**38100 GRENOBLE (FR)**
• **Vaufrey, David**
**38000 GRENOBLE (FR)**

(74) Mandataire: **Brevalex
56, Boulevard de l'Embouchure
B.P. 27519
31075 Toulouse Cedex 2 (FR)**

(56) Documents cités:
**KR-A- 20080 064 425**

• **HYUKCHOON KWON (SAMSUNG
ELECTRONICS): "Modulation Categorization of
VLC ;
15-08-0430-01-0vlc-modulation-categorizati
on-of-vlc", IEEE DRAFT;
15-08-0430-01-0VLC-MODULATION-CATEGORIZ
ATI ON-OF-VLC, IEEE-SA MENTOR,
PISCATAWAY, NJ USA, vol. 802.15SGVLC, no. 1,
17 juillet 2008 (2008-07-17), pages 1-12,
XP017667957,**
• **KANG-IL AHN ET AL: "Capacity Analysis of
M-PAM Inverse Source Coding in Visible Light
Communications", JOURNAL OF LIGHTWAVE
TECHNOLOGY, IEEE SERVICE CENTER, NEW
YORK, NY, US, vol. 30, no. 10, 1 mai 2012
(2012-05-01), pages 1399-1404, XP011440081,
ISSN: 0733-8724, DOI: 10.1109/JLT.2012.2185780**
• **LEE SANG HYUN ET AL: "Multilevel
Transmission in Dimmable Visible Light
Communication Systems", JOURNAL OF
LIGHTWAVE TECHNOLOGY, IEEE SERVICE
CENTER, NEW YORK, NY, US, vol. 31, no. 20, 1
octobre 2013 (2013-10-01), pages 3267-3276,
XP011527828, ISSN: 0733-8724, DOI:
10.1109/JLT.2013.2281209 [extrait le 2013-09-24]**

EP 2 942 884 B1

## Description

## DOMAINE TECHNIQUE

La présente invention concerne le domaine de l'optimisation du débit de données, dans le cadre d'un système de communication dans lequel l'information est encodée dans un signal lumineux situé dans la partie visible du spectre électromagnétique. Un tel système de communication est communément nommé Li-Fi.

## ÉTAT DE LA TECHNIQUE ANTÉRIEURE

On connaît dans l'art antérieur des systèmes de communication Li-Fi comprenant une LED formant des moyens d'émission, et un photodétecteur formant des moyens de réception. La LED fournit un signal lumineux dans le visible (généralement entre 400 nm et 800 nm). Ce signal est modulé en intensité, ce qui permet la transmission d'information.

Un tel système de communication est particulièrement avantageux en ce qu'on peut utiliser comme moyens d'émissions les LED de systèmes d'éclairage préexistants. La LED fournit alors un signal lumineux dans lequel on peut identifier deux composantes : une composante continue, assurant une fonction d'éclairage, et une composante alternative dont les variations seront imperceptibles pour l'oeil humain et assurant une fonction de transmission de données.

Les LED couramment utilisées pour combiner les fonctions d'éclairage et de transmission de données sont des LED émettant une lumière blanche. On utilise par exemple une LED émettant une lumière bleue, associée à une couche de phosphore qui absorbe une partie du signal lumineux bleu et émet en réponse un signal lumineux jaune. Le signal finalement émis est la somme d'un signal bleu et d'un signal jaune, c'est-à-dire de la lumière blanche. On peut également utiliser un ensemble de quatre LED émettant respectivement dans le rouge, le vert, le bleu et l'orange, le signal lumineux total correspondant à de la lumière blanche.

On connaît par exemple la demande de brevet KR 2008 0064425, qui décrit un procédé de transmission de données par modulation de lumière visible, offrant à la fois une faible consommation de puissance pour l'émission du signal lumineux, et une bonne transmission.

On connaît également la présentation de Hyuk-Choon Kwon et al., Samsung Electronics, 2008.07., IEEE 802.15, intitulée « Modulation Categorization of Visible Light Communication », qui présente différentes catégories de modulation utilisables pour la communication par lumière visible.

Les débits atteignables à l'aide d'un système de communication Li-Fi sont théoriquement de l'ordre du Gbits/s, sous certaines conditions (norme 802.11n par exemple), soit environ 10 fois plus que le débit d'un système de communication Wi-Fi. De nombreux travaux s'intéressent à l'optimisation de ce débit.

Il a par exemple été proposé des systèmes de communication Li-Fi comprenant des optiques de collimation, permettant d'optimiser le flux lumineux reçu par le photodétecteur. D'autres travaux ont proposé d'optimiser ce débit dans le cadre d'une LED à couche de phosphore. Le phénomène d'absorption et émission par le phosphore est lent en comparaison avec le temps de réponse de la LED bleue. On peut améliorer le débit en n'utilisant que le signal lumineux bleu pour la transmission de données.

Un objectif de la présente invention est de proposer un procédé permettant d'améliorer encore les débits de transmission de données atteignables à l'aide d'un système de communication Li-Fi.

Un autre objectif de la présente invention est de proposer un dispositif pour mettre en oeuvre un tel procédé.

## EXPOSÉ DE L'INVENTION

Cet objectif est atteint avec premier procédé d'optimisation du débit de données, dans un système de communication sans fil comprenant une diode électroluminescente formant des moyens d'émission, ladite diode électroluminescente étant alimentée par un signal d'alimentation comprenant une composante continue et une composante alternative.

Le premier procédé selon l'invention comprend les étapes suivantes :

- fixation d'une valeur de la composante continue du signal d'alimentation ;
- ajustement d'une amplitude de modulation de la composante alternative du signal d'alimentation, à partir d'une mesure d'un paramètre dit utile, représentatif de la qualité de transmission d'un signal dit utile, le signal utile correspondant à un signal lumineux émis par la diode électroluminescente et reçu par un photodétecteur formant des moyens de réception du système de communication sans fil.

De préférence, l'ajustement est réalisé par incréments successifs.

Le paramètre représentatif de la qualité de transmission du signal utile peut être un rapport signal sur bruit ou un taux d'erreur binaire ou un taux d'erreur paquet ou un taux d'erreur trame.

Selon un premier mode de réalisation, l'ajustement d'une amplitude de modulation comprend les étapes suivantes :

- une étape initiale de mesure des valeurs du paramètre utile obtenues pour une amplitude de modulation initiale, pour cette amplitude de modulation initiale plus un incrément d'amplitude de modulation, et pour cette amplitude de modulation initiale moins ledit incrément ;

- une recherche de la valeur du paramètre utile correspondant à la meilleure qualité de transmission du signal utile, parmi lesdites valeurs du paramètre utile mesurées, dite extremum local ;
- lorsque cet extremum local ne correspond pas à l'amplitude de modulation initiale, poursuite de l'ajustement, en augmentant l'amplitude de modulation si l'extremum local correspond à l'amplitude de modulation initiale plus ledit incrément, ou en diminuant l'amplitude de modulation si l'extremum local correspond à l'amplitude de modulation initiale moins ledit incrément.

Selon un deuxième mode de réalisation, le premier procédé selon l'invention comprend une étape de comparaison entre la composante continue du signal d'alimentation, et une première valeur d'inversion séparant deux comportements de la diode électroluminescente :

- un premier comportement tel que l'évolution de la valeur du paramètre utile traduit une amélioration de la qualité de transmission du signal utile, lorsque l'amplitude de modulation augmente ; et
- un second comportement tel que l'évolution de la valeur du paramètre utile traduit une diminution de la qualité de transmission du signal utile, lorsque l'amplitude de modulation augmente.

De préférence, l'ajustement de l'amplitude de modulation selon ce deuxième mode de réalisation met en oeuvre au moins un incrément positif ou négatif selon que la diode électroluminescente présente le premier ou le second comportement.

Le premier procédé selon ce deuxième mode de réalisation de l'invention peut comprendre une étape initiale de détermination de la première valeur d'inversion.

La détermination de la première valeur d'inversion peut mettre en oeuvre des mesures de spectres d'impédance de la diode électroluminescente, pour différentes valeurs de la composante continue du signal d'alimentation, la première valeur d'inversion séparant deux comportements de la diode électroluminescente :

- un premier comportement tel que le rayon du spectre d'impédance augmente avec l'amplitude de modulation ; et
- un second comportement tel que le rayon du spectre d'impédance augmente lorsque l'amplitude de modulation diminue.

En variante, la détermination de la première valeur d'inversion peut mettre en oeuvre une recherche du point d'intersection de plusieurs courbes représentant la résistance équivalente de la diode électroluminescente en fonction de la composante continue de son signal d'alimentation.

Selon une autre variante, la détermination de la première valeur d'inversion peut mettre en oeuvre une recherche d'un point d'inflexion sur une courbe représentative du logarithme de l'intensité du courant traversant la diode électroluminescente en fonction d'une tension continue d'alimentation.

L'invention concerne également un second procédé d'optimisation du débit de données, dans un système de communication sans fil comprenant une diode électroluminescente formant des moyens d'émission, ladite diode électroluminescente étant alimentée par un signal d'alimentation comprenant une composante continue et une composante alternative.

Le second procédé selon l'invention comprend les étapes suivantes :

- fixation d'une amplitude de modulation de la composante alternative du signal d'alimentation ; et
- ajustement de la composante continue du signal d'alimentation, à partir d'une mesure d'un paramètre dit utile, représentatif de la qualité de transmission d'un signal dit utile, le signal utile correspondant à un signal lumineux émis par la diode électroluminescente et reçu par un photodétecteur formant des moyens de réception du système de communication sans fil.

L'invention concerne aussi un premier module d'optimisation adapté à mettre en oeuvre le premier procédé selon l'invention, et comprenant :

- un variateur d'intensité, agencé pour fixer la valeur de la composante continue du signal d'alimentation de la diode électroluminescente ;
- des moyens de traitement du signal, adaptés à mesurer la valeur du paramètre utile ;
- des moyens de commande, agencés pour modifier l'amplitude de modulation de la composante alternative du signal d'alimentation de la diode électroluminescente ; et
- des moyens d'ajustement recevant en entrée la valeur du paramètre utile, et pilotant les moyens de commande pour modifier l'amplitude de modulation, de façon à modifier la valeur du paramètre utile dans le sens d'une amélioration de la qualité de transmission du signal utile.

Avantageusement, le premier module selon l'invention comprend en outre des moyens de comparaison entre la composante continue du signal d'alimentation de la diode électroluminescente, et une première valeur d'inversion séparant deux comportements de la diode électroluminescente :

- un premier comportement tel que l'évolution de la valeur du paramètre utile traduit une amélioration de la qualité de transmission du signal utile, lorsque l'amplitude de modulation augmente ; et

- un second comportement tel que l'évolution de la valeur du paramètre utile traduit une diminution de la qualité de transmission du signal utile, lorsque l'amplitude de modulation augmente.

L'invention concerne également un premier système de communication sans fil comprenant une diode électroluminescente formant des moyens d'émission, un photodétecteur formant des moyens de réception, ladite diode électroluminescente étant alimentée par un signal d'alimentation comprenant une composante continue et une composante alternative, et un premier module d'optimisation selon l'invention.

L'invention concerne aussi un second module d'optimisation adapté à mettre en oeuvre le second procédé selon l'invention, et comprenant :

- un variateur d'amplitude de modulation, agencé pour fixer l'amplitude de modulation de la composante alternative du signal d'alimentation de la diode électroluminescente ;
- des moyens de traitement du signal, adaptés à mesurer la valeur du paramètre utile ;
- des moyens de commande, agencés pour modifier la composante continue du signal d'alimentation de la diode électroluminescente ; et
- des moyens d'ajustement recevant en entrée la valeur du paramètre utile, et pilotant les moyens de commande pour modifier la composante continue du signal d'alimentation, de façon à modifier la valeur du paramètre utile dans le sens d'une amélioration de la qualité de transmission du signal utile.

L'invention concerne enfin un second système de communication sans fil comprenant une diode électroluminescente formant des moyens d'émission, et un photodétecteur formant des moyens de réception, ladite diode électroluminescente étant alimentée par un signal d'alimentation comprenant une composante continue et une composante alternative, et un second module d'optimisation selon l'invention.

**BRÈVE DESCRIPTION DES DESSINS**

La présente invention sera mieux comprise à la lecture de la description d'exemples de réalisation donnés à titre purement indicatif et nullement limitatif, en faisant référence aux dessins annexés sur lesquels :

- la figure 1 illustre des courbes du rapport signal sur bruit en fonction de la fréquence, dans un système de communication Li-Fi, pour différentes amplitudes de modulation de la composante alternative de la tension d'alimentation d'une LED, et pour une première valeur de la composante continue de ladite tension d'alimentation ;
- la figure 2 correspond à la figure 1, et pour une deuxième valeur de ladite composante continue ;

- la figure 3 correspond à la figure 1, et pour une troisième valeur de ladite composante continue ;
- la figure 4 illustre de manière schématique un premier mode de réalisation de procédé selon l'invention ;
- la figure 5 illustre de manière schématique une variante du premier mode de réalisation de procédé selon l'invention ;
- les figures 6A à 6D illustrent des mesures d'impédance de ladite LED, pour différentes valeurs de la composante continue de sa tension d'alimentation ;
- la figure 7 illustre un circuit équivalent à ladite LED ;
- la figure 8 illustre des courbes de résistance équivalente de ladite LED, en fonction de la composante continue de sa tension d'alimentation ;
- la figure 9 illustre le logarithme de l'intensité du courant passant par la LED, en fonction de sa tension d'alimentation continue ;
- la figure 10 illustre de manière schématique un premier mode de réalisation d'un module d'optimisation et système de communication selon l'invention ;
- la figure 11 illustre de manière schématique une première variante du module d'optimisation et du système de communication de la figure 10 ;
- la figure 12 illustre de manière schématique une deuxième variante du module d'optimisation et du système de communication de la figure 10 ;
- la figure 13 illustre de manière schématique un deuxième mode de réalisation de procédé selon l'invention ;
- la figure 14 illustre de manière schématique une variante du procédé de la figure 13 ; et
- la figure 15 illustre de manière schématique un deuxième mode de réalisation d'un module d'optimisation et système de communication selon l'invention.

**EXPOSÉ DÉTAILLÉ DE MODES DE RÉALISATION PARTICULIERS**

On illustrera tout d'abord les observations à l'origine de la présente invention.

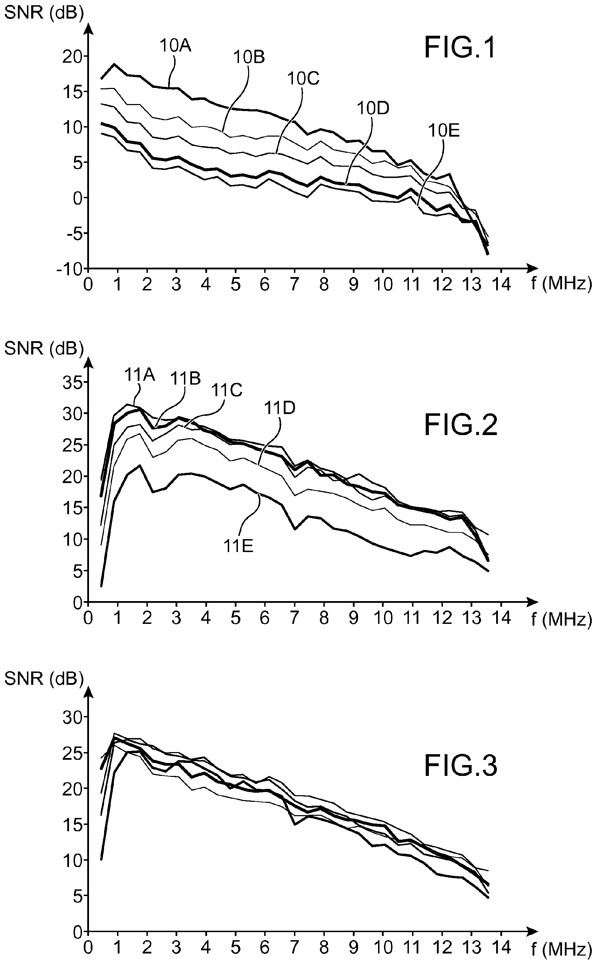

La figure 1 illustre des courbes du rapport signal sur bruit (en dB) en fonction de la fréquence (en MHz), pour un signal électrique correspondant au signal lumineux émis par une LED et reçu par un photodétecteur non saturé placé à 1,5 cm de la LED. Le rapport signal sur bruit est désigné par l'acronyme SNR, pour l'anglais « Signal-to-Noise Ratio ».

A chaque courbe correspond une valeur d'amplitude de modulation de la composante alternative de la tension d'alimentation de la LED. On parle également, plus simplement, de l'amplitude de modulation de la tension d'alimentation de la LED. On définit ici l'amplitude de modulation comme étant la moitié de l'amplitude crête à crête du signal modulé.

Toutes les courbes correspondent à une même valeur de la composante continue de cette tension d'alimentation. La composante continue de la tension d'alimentation est également nommée tension de polarisation, ou bias (en anglais). La composante continue vaut ici 2,50 V.

Le signal venant se superposer à la tension de polarisation est une modulation à moyenne nulle formant la composante alternative de la tension d'alimentation de la LED. Il s'agit d'une modulation de type OFDM (pour « Orthogonal Frequency-Division Multiplexing »), adaptée au Li-Fi (signal réel unipolaire). La composante alternative de la tension d'alimentation est ici réalisée à partir de 31 sous-porteuses réparties sur une bande de 14 MHz.

En considérant les courbes de haut en bas, celles-ci correspondent respectivement à une amplitude de modulation de 0,05 V (courbe 10A) ; 0,10 V (courbe 10B) ; 0,15 V (courbe 10C) ; 0,25 V (courbe 10D) ; 0,35 V (courbe 10E). On voit donc que pour cette valeur de la composante continue de la tension d'alimentation, le rapport signal sur bruit augmente lorsque l'amplitude de modulation diminue.

On suppose par exemple qu'il faut un rapport signal sur bruit supérieur ou égal à 7 dB pour pouvoir réaliser un décodage fiable (typiquement avec un taux d'erreur binaire inférieur à $10^{-4}$). La courbe 10A prend des valeurs supérieures ou égales à 7 dB pour toutes les fréquences inférieures à environ 10 MHz. Soit une efficacité spectrale égale à 2 bits/Hz/s, cela correspond à un débit total de 20 Mbits/s. La courbe 10E ne prend des valeurs supérieures ou égale à 7 dB que pour les fréquences inférieures à environ 2 MHz. Soit une efficacité spectrale égale à 2 bits/Hz/s, cela correspond à un débit total de 4 Mbits/s. Ainsi, plus le rapport signal sur bruit est élevé, plus le débit est élevé.

La figure 2 correspond à la figure 1, à la différence près que la composante continue de la tension d'alimentation est égale à 2,70 V.

En considérant les courbes de haut en bas, celles-ci correspondent respectivement à une amplitude de modulation de 0,35 V (courbe 11A) ; 0,25 V (courbe 11B) ; 0,15 V (courbe 11C) ; 0,10 V (courbe 11D) ; 0,05 V (courbe 11E). On voit donc que pour cette valeur de la composante continue de la tension d'alimentation, le rapport signal sur bruit augmente lorsque l'amplitude de modulation augmente.

La figure 3 correspond à la figure 1, à la différence près que la composante continue de la tension d'alimentation est égale à 2,62V

Les différentes courbes correspondent toujours à des amplitudes de modulation de 0,35 V ; 0,25 V ; 0,15 V ; 0,10 V ; 0,05 V. Ces courbes sont cette fois très proches les unes des autres (pour une fréquence donnée, moins de 5 dB de différence entre la courbe de SNR maximum et la courbe de SNR minimum, contre au moins 10 dB dans les deux cas précédents).

Les mêmes observations ont été réalisées pour différents modèles de LED, et pour différentes distances entre la LED et le photodétecteur.

On a ainsi pu en déduire que l'on pouvait distinguer deux régimes de fonctionnement, ou comportements d'une LED, quel que soit le modèle de celle-ci :

- un premier comportement, tel que le rapport signal sur bruit (et donc le débit) augmente lorsque l'amplitude de modulation augmente (et inversement) ;
- un second comportement, tel que le rapport signal sur bruit (et donc le débit) augmente lorsque l'amplitude de modulation diminue (et inversement).

Le premier comportement correspond à de grandes valeurs de la composante continue de la tension d'alimentation de la LED. Il correspond en particulier à une composante continue supérieure à une valeur seuil de la tension continue appelée ici première valeur d'inversion.

Le second comportement correspond à de faibles valeurs de la composante continue de la tension d'alimentation de la LED. Il correspond en particulier à une composante continue inférieure à ladite première valeur d'inversion.

On peut définir un troisième comportement, qui correspond à une composante continue proche de ladite première valeur d'inversion (par exemple à 5% près). Ce troisième comportement correspond à un cas dans lequel le rapport signal sur bruit ne dépend pas de l'amplitude de modulation. On dit que le rapport signal sur bruit ne dépend pas de l'amplitude de modulation, par exemple lorsque celui-ci varie de moins de 5 dB pour toute la plage d'amplitudes de modulation que l'on souhaite utiliser pour coder une information, allant par exemple de 2% à 30% de la composante continue de la tension d'alimentation de la LED.

En reprenant les courbes des figures 1 à 3, on en déduit que dans cette expérience, la première tension d'inversion est proche de 2,62V (valeur pour la figure 3, sur laquelle le rapport signal sur bruit varie peu avec l'amplitude de modulation). A chaque LED correspond une première valeur d'inversion propre.

Les figures 1 à 3 montrent des variations de rapport signal sur bruit correspondant à différentes valeurs de la composante continue de la tension d'alimentation. Or, la caractéristique I(V) d'une LED est une bijection. En d'autres termes, à une valeur de la tension d'alimentation correspond une unique valeur du courant d'alimentation. On peut donc généraliser les conclusions précédentes à tout signal d'alimentation comprenant une composante continue et une composante alternative à moyenne nulle, ce signal d'alimentation pouvant être une tension d'alimentation ou un courant d'alimentation de la LED. La première valeur d'inversion peut alors être une première tension d'inversion, ou un premier courant d'inversion.

Dans toute la suite, et de manière non limitative, on développe l'exemple d'une tension d'alimentation et d'une première tension d'inversion. On pourrait aisément développer des exemples similaires en remplaçant les tensions par des courants.

De la même façon, les figures 1 à 3 montrent des variations de rapport signal sur bruit correspondant à différentes valeurs de la composante continue du signal d'alimentation. Or, on peut montrer que l'on obtient des résultats similaires avec tout autre paramètre, dit utile, représentatif de la qualité de transmission du signal, dit utile, émis par les moyens d'émission d'un système LiFi et reçu par les moyens de réception de ce système.

Le paramètre utile peut être mesuré sur un signal représentatif de la décomposition spectrale du signal utile. Le paramètre utile est alors par exemple une intensité maximale absolue, ou une intensité maximale relative.

Le paramètre utile peut également être mesuré sur un signal correspondant au signal utile après décodage. Le paramètre utile est alors par exemple un taux d'erreur binaire (BER, pour l'anglais « Bit Error Rate »). En variante, le paramètre utile est un taux d'erreur trame (taux de trames rejetée car considérées non valides) ou un taux d'erreur paquet (taux de paquets rejetés car considérés non valides). De tels paramètres utiles supposent avantageusement que le signal émis par les moyens d'émission d'un système LiFi est connu, notamment l'information encodée dans ce signal. On peut ainsi comparer l'information encodée à l'émission, et l'information reçue par les moyens de réception du système LiFi. En variante, ce signal n'est pas connu, et on détermine un taux d'erreur en utilisant un code de détection d'erreur, en réception (par exemple un code CRC, pour « Cycle Redundancy Check »).

Le paramètre utile peut être obtenu à partir du rapport signal sur bruit. Il s'agit par exemple d'une capacité du canal de transmission.

Ces autres paramètres utiles peuvent également être facilement reliés au débit : meilleure est la qualité de transmission entre les moyens d'émission d'un système LiFi et les moyens de réception de ce système, meilleur est le débit.

Dans toute la suite, et de manière non limitative, on développe l'exemple de la mesure du rapport signal sur bruit. On pourrait aisément développer des exemples similaires en remplaçant le rapport signal sur bruit par tout autre paramètre représentatif de la qualité de transmission d'un signal.

Soit une LED alimentée par une tension comprenant une composante continue et une composante alternative à moyenne nulle, on a donc observé que le flux lumineux moyen fourni par cette LED dépend de l'amplitude de modulation de la composante alternative. Cette observation est contraire à l'intuition de l'homme du métier. En effet, la composante alternative étant à moyenne nulle, elle ne devrait pas influencer la valeur de ce flux lumineux. L'invention exploite ces observations, montrant que les propriétés optiques de la LED dépendent notamment des caractéristiques de son alimentation électrique.

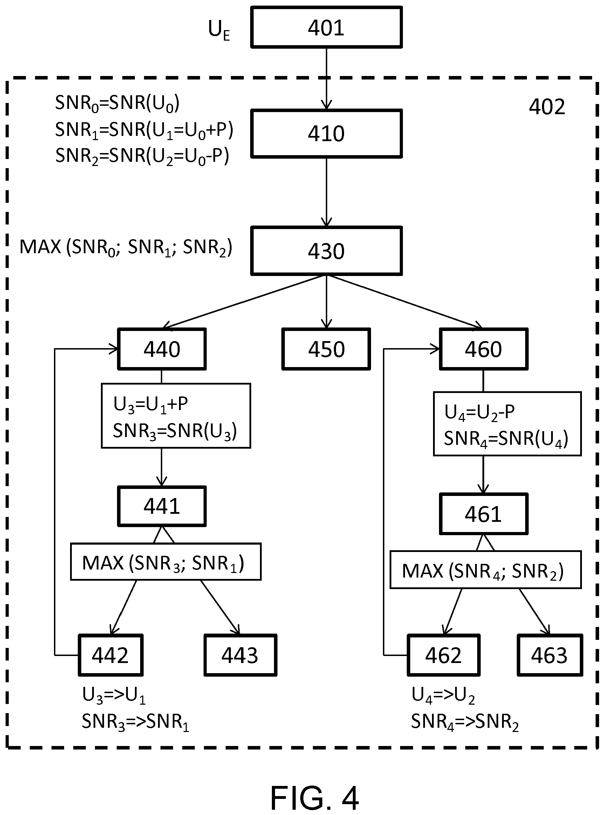

La figure 4 illustre de manière schématique un premier mode de réalisation de procédé selon l'invention.

Ce procédé vise à optimiser un débit de données transitant entre une LED et un photodétecteur formant respectivement les moyens d'émission et de réception d'un système de communication sans fil Li-Fi.

Dans l'exemple représenté en figure 4, le photodétecteur est une simple photodiode, ou tout autre moyen de détection de photons présentant une grande largeur spectrale de détection (par exemple supérieure à 50 nm). Un tel moyen de détection de photons fournit une mesure correspondant à la somme des photons reçus, pour toutes les longueurs d'onde de la largeur spectrale de détection dite bande spectrale d'intérêt. La bande spectrale d'intérêt correspond typiquement à la bande spectrale d'émission de la LED.

La LED fournit avantageusement un signal prédéterminé. En particulier, pendant toute l'étape d'ajustement telle que décrite dans la suite, la LED fournit avantageusement un signal présentant la même trame. On s'assure ainsi de ne faire varier qu'un seul paramètre à la fois, susceptible de modifier la qualité de transmission du signal.

Selon un mode de réalisation particulier de l'invention, pendant toute l'étape d'ajustement telle que décrite dans la suite, la LED fournit un signal identique.

La LED est alimentée par une tension d'alimentation comprenant une composante continue, et une composante alternative. La LED remplit deux fonctions : une fonction d'éclairage par une composante continue du signal lumineux qu'elle émet, et une fonction de transmission d'informations via une composante modulée de ce signal lumineux.

Dans tout le texte, on considère une composante alternative de la tension d'alimentation, à moyenne nulle. Dans le cas le plus simple, cela correspond à un codage de l'information grâce à une modulation de l'intensité lumineuse à moyenne nulle. Néanmoins, même lorsque le codage de l'information correspond à une modulation de l'intensité lumineuse à moyenne non nulle, il est toujours possible de décomposer *in fine* la tension d'alimentation en une composante continue et une composante alternative à moyenne nulle.

Le procédé selon l'invention comprend une première étape 401 consistant à fixer une valeur $U_E$ pour la composante continue de la tension d'alimentation de la LED. Cette valeur $U_E$ est fixée en particulier en fonction d'un besoin en éclairage. Par exemple, on choisit $U_E$ faible pour un éclairage tamisé, et $U_E$ élevé pour un éclairage fort.

Au cours d'une deuxième étape 402, on ajuste l'amplitude de modulation $U_M$ de la composante alternative de la tension d'alimentation de la LED, de façon à améliorer le débit de données fourni par la LED et reçu par le photodétecteur.

Dans l'exemple développé ici, le paramètre utile tel que défini précédemment est le rapport signal sur bruit. Une amélioration du débit de données correspond à une augmentation du rapport signal sur bruit. L'étape 402 consiste donc à obtenir un rapport signal sur bruit plus élevé. En fonction de la nature du paramètre utile, l'ajustement correspond à une augmentation ou une diminution du paramètre utile. Par exemple, une amélioration du débit de données correspond à une diminution du taux d'erreur binaire ou du taux d'erreur paquet ou du taux d'erreur trame.

De préférence, l'étape 402 consiste à optimiser le débit de données, par une recherche d'un extremum du paramètre utile. Dans l'exemple développé ici, on cherche à obtenir le rapport signal sur bruit le plus élevé possible.

Le rapport signal sur bruit est mesuré sur un signal électrique fourni par le photodétecteur en réponse à la réception du signal lumineux émis par la LED. On mesure ainsi le rapport signal sur bruit associé au signal utile tel que défini précédemment. La mesure du rapport signal sur bruit peut mettre en oeuvre une mesure de l'amplitude maximale, moyenne ou minimale dudit signal électrique, la mesure du bruit dudit signal électrique, et le calcul du rapport entre ces deux mesures.

En variante, on mesure un rapport signal sur bruit par les étapes suivantes :

- émission par la LED d'un signal lumineux prédéterminé ;
- propagation de ce signal lumineux entre la LED et le photodétecteur ;
- réception par le photodétecteur du signal utile correspondant au signal émis par la LED, puis propagé de la LED jusqu'au photodétecteur. Le photodétecteur fournit un signal électrique, en réponse à cette réception ;
- mesure du rapport signal sur bruit dudit signal électrique, en comparant le signal utile mesuré par le photodétecteur et le signal lumineux prédéterminé.

Le rapport signal sur bruit peut être mesuré sur un diagramme de constellation dudit signal électrique.

On pourra envisager toute autre méthode de mesure d'un rapport signal sur bruit sans sortir du cadre de la présente invention. Ces méthodes de mesures étant bien connues de l'homme du métier, elles ne seront pas décrites plus avant.

L'amplitude de modulation $U_M$ est modifiée par incréments successifs.

On choisit de préférence une valeur initiale $U_0$ pour l'amplitude de modulation $U_M$ en fonction de la valeur de la composante continue de la tension d'alimentation. Par exemple, cette valeur initiale $U_0$ est comprise entre 2% et 30% de $U_E$, notamment entre 5% et 20%, par exemple 15%.

On choisit de préférence la valeur de l'incrément P en fonction de la valeur initiale $U_0$ de l'amplitude de modulation. Par exemple, cet incrément P est compris entre 0,5% et 5% de $U_0$, notamment entre 1% et 3%, par exemple 2%.

On va maintenant décrire l'exemple particulier d'ajustement de l'amplitude de modulation $U_M$, tel qu'illustré en figure 4.

Cet ajustement 402 comprend une étape initiale 410 de mesure des rapports signal sur bruit obtenus :

- pour l'amplitude de modulation initiale $U_0$;
- pour l'amplitude de modulation initiale augmentée de la valeur de l'incrément : $U_0+P$. On définit la variable $U_1$ qui prend comme valeur initiale $U_0+P$ ;
- pour l'amplitude de modulation initiale diminuée de la valeur de l'incrément : $U_0-P$. On définit la variable $U_2$ qui prend comme valeur initiale $U_0-P$ ;

On obtient ainsi trois rapports signal sur bruit notés respectivement $SNR_0$, $SNR_1$ et $SNR_2$. On a $SNR_0=SNR(U_0)$ ; $SNR_1=SNR(U_1)$ ; $SNR_2=SNR(U_2)$.

Dans une étape 430, on recherche, parmi ces trois rapports signal sur bruit, lequel est le plus élevé. On nomme « maximum local » le rapport signal sur bruit le plus élevé parmi $SNR_0$, $SNR_1$ et $SNR_2$.

On identifie alors trois cas :

- un premier cas dans lequel le maximum local est $SNR_0$;
- un deuxième cas dans lequel le maximum local est $SNR_1$;
- un troisième cas dans lequel le maximum local est $SNR_2$.

Dans le premier cas, il n'est pas nécessaire de modifier l'amplitude de modulation. A l'étape 450, on fournit l'amplitude de modulation optimisée égale à l'amplitude de modulation initiale $U_0$.

Dans le deuxième cas, le rapport signal sur bruit augmente lorsque l'amplitude de modulation augmente. La LED présente alors le premier comportement tel que défini ci-avant. Le rapport signal sur bruit tend alors à augmenter lorsque l'amplitude de modulation augmente, jusqu'à atteindre une valeur maximale. Il n'est donc plus nécessaire de tester des amplitudes de modulation inférieures à l'amplitude de modulation initiale $U_0$. On poursuit donc l'ajustement de l'amplitude de modulation, en augmentant celle-ci par incréments successifs P.

On peut poursuivre l'ajustement jusqu'à ce que le rapport signal sur bruit n'augmente plus lorsque l'amplitude de modulation augmente (obtention du rapport signal sur bruit maximum), comme décrit ci-dessous.

On définit la variable $U_3$ qui prend comme valeur initiale $U_1+P$ (amplitude de modulation $U_1$ augmentée de la valeur de l'incrément P). Au cours de l'étape 440, on mesure le rapport signal sur bruit $SNR_3$, associé à $U_3$. Au cours de l'étape 441, on recherche le rapport signal sur bruit maximum, parmi le rapport signal sur bruit $SNR_3$, et le rapport signal sur bruit $SNR_1$ précédemment mesuré. Si le rapport signal sur bruit maximum est $SNR_1$, c'est que l'amplitude de modulation optimisée correspond à la valeur prise par $U_1$. On peut donc arrêter l'ajustement de l'amplitude de modulation. A l'étape 443, on fournit l'amplitude de modulation optimisée égale à la valeur prise par $U_1$. Si le rapport signal sur bruit maximum est $SNR_3$, c'est que l'amplitude de modulation doit peut-être encore être ajustée avant d'atteindre sa valeur optimisée (maximum absolu du rapport signal sur bruit). A l'étape 442, on attribue à la variable $U_1$ la valeur de $U_3$, et donc à la variable $SNR_1$ la valeur de $SNR_3$. Ensuite, on réitère les étapes 440 et 441. On peut donc parler d'un procédé en boucle, ou itératif. On aura ainsi, à la $n^{\text{ème}}$ itération des étapes 440 et 441 : $U_1=U_0+n*P$ et $U_3=U_0+(n+1)*P$. Les itérations prennent fin lorsque le rapport signal sur bruit maximum identifié à l'étape 441 est $SNR_1$.

En variante, on arrête les itérations avant d'avoir obtenir le rapport signal sur bruit maximum. On aura tout de même augmenté le rapport signal sur bruit par rapport à la situation avant ajustement de l'amplitude de modulation.

Dans le troisième cas, le rapport signal sur bruit augmente lorsque l'amplitude de modulation diminue. La LED présente alors le second comportement tel que défini ci-avant. Le rapport signal sur bruit tend alors à augmenter lorsque l'amplitude de modulation diminue, jusqu'à atteindre une valeur maximale. Il n'est donc plus nécessaire de tester des amplitudes de modulation supérieures à l'amplitude de modulation initiale $U_0$. On poursuit donc l'ajustement de l'amplitude de modulation, en diminuant celle-ci par incréments successifs P.

On peut poursuivre l'ajustement jusqu'à ce que le rapport signal sur bruit n'augmente plus lorsque l'amplitude de modulation diminue (obtention du rapport signal sur bruit maximum), comme décrit ci-dessous.

On définit la variable $U_4$ qui prend comme valeur initiale $U_2$-P (amplitude de modulation $U_2$ diminuée de la valeur de l'incrément P). Au cours de l'étape 460, on mesure le rapport signal sur bruit $SNR_4$, associé à $U_4$. Au cours de l'étape 461, on recherche le rapport signal sur bruit maximum, parmi le rapport signal sur bruit $SNR_4$, et le rapport signal sur bruit $SNR_2$ précédemment mesuré. Si le rapport signal sur bruit maximum est $SNR_2$, c'est que l'amplitude de modulation optimisée correspond à la valeur prise par $U_2$. On peut donc arrêter l'ajustement de l'amplitude de modulation. A l'étape 463, on fournit l'amplitude de modulation optimisée égale à la valeur prise par $U_2$. Si le rapport signal sur bruit maximum est $SNR_4$, c'est que l'amplitude de modulation doit peut-être encore être ajustée avant d'atteindre sa valeur optimisée (maximum absolu du rapport signal sur bruit). A l'étape 462, on attribue à la variable $U_2$ la valeur de $U_4$, et donc à la variable $SNR_2$ la valeur de $SNR_4$. Ensuite, on réitère les étapes 460 et 461. On peut donc parler d'un procédé en boucle, ou itératif. On aura ainsi, à la $n^{\text{ème}}$ itération des étapes 460 et 461 : $U_2=U_0-n*P$ et $U_4=U_0-(n+1)*P$. Les itérations prennent fin lorsque le rapport signal sur bruit maximum identifié à l'étape 461 est $SNR_2$.

En variante, on arrête les itérations avant d'avoir obtenir le rapport signal sur bruit maximum. On aura tout de même augmenté le rapport signal sur bruit par rapport à la situation avant ajustement de l'amplitude de modulation.

La valeur de l'incrément peut varier au cours de la mise en oeuvre du procédé d'ajustement.

L'invention propose donc un procédé d'ajustement d'une amplitude de modulation du signal d'alimentation de la LED d'un système Li-Fi, permettant d'optimiser le débit de transmission de données du système Li-Fi tout en répondant à un besoin donné en éclairage. Une optimisation par l'amplitude de modulation constitue un moyen d'optimisation original, d'autant que rien ne laissait penser *a priori* qu'un ajustement précis de ce paramètre pourrait influencer le débit. L'ajustement est réalisé après avoir fixé la valeur de la composante continue du signal d'alimentation, ce qui contribue également au caractère original de ce procédé.

L'ajustement ne consiste pas simplement à vérifier que l'amplitude de modulation se situe à l'intérieur d'une large plage de fonctionnement, mais à affiner un positionnement de l'amplitude de modulation à l'intérieur de cette plage, quitte à s'approcher des bornes de ladite plage alors que l'homme du métier est généralement incité à travailler à distance de ces bornes.

Un avantage du mode de réalisation décrit en référence à la figure 4 est qu'après une étape 410 permettant d'identifier dans quel sens modifier l'amplitude de modulation pour l'ajustement (augmentation ou diminution progressive de sa valeur), l'ajustement ne se fait que par augmentations successives, respectivement diminutions successives. On diminue ainsi un nombre de calculs et mesures nécessaires pour arriver à la valeur optimisée de l'amplitude de modulation.

On peut poser comme règle simple de préférer de grandes amplitudes de modulation lorsque l'on souhaite combiner une fonction de transmission avec une fonction d'éclairage intense, et de préférer de faibles amplitudes de modulation lorsque l'on souhaite combiner des fonctions de transmission et d'éclairage faible.

Selon une variante non représentée, le paramètre utile est mesuré sur un signal représentatif de la décomposition spectrale du signal utile. Dans ce cas, le photodétecteur est apte à classer les photons reçus en fonction de leur longueur d'onde. Un tel photodétecteur comprend par exemple une barrette de diodes coopérant avec des moyens de dispersion spectrale tels qu'une fente. Un tel photodétecteur fournit une mesure indiquant, pour chaque longueur d'onde de la bande spectrale d'intérêt, l'intensité lumineuse reçue.

Selon une autre variante non représentée, le paramètre utile est un taux d'erreur binaire, ou un taux d'erreur trame, ou un taux d'erreur paquet. Les données encodées dans le signal lumineux émis par la LED sont avantageusement connues, pour être comparées aux données reçues. On parle de façon générale d'un signal d'émission connu. En variante, ce signal n'est pas connu, et on détermine un taux d'erreur en utilisant un code de détection d'erreur.

Les méthodes de mesure d'un taux d'erreur binaire, un taux d'erreur trame, un taux d'erreur paquet, ou tout autre paramètre représentatif de la qualité du signal utile sont bien connues de l'homme du métier. Elles ne seront donc pas décrites plus avant dans la suite.

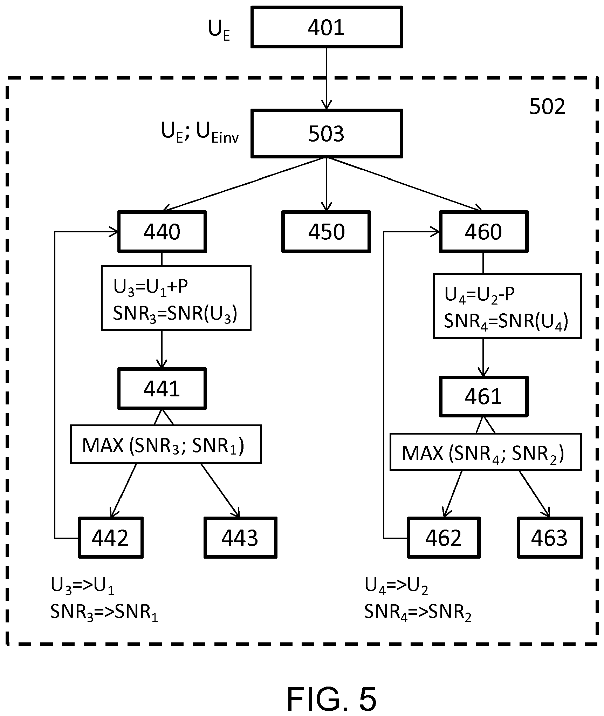

La figure 5 illustre une variante du procédé illustré en figure 4.

Le procédé de la figure 5 diffère du procédé de la figure 4 en ce que l'étape d'ajustement 502 commence par une étape 503 de comparaison entre la valeur $U_E$ de la composante continue de la tension d'alimentation de la LED, et la première tension d'inversion telle que définie en référence aux figures 1 à 3. La première tension d'inversion est notée $U_{Einv}$.

Si $U_E$ est supérieure à $U_{Einv}$, la LED présente le premier comportement tel que défini ci-avant. On met alors en oeuvre les étapes 440, 441, 442 et 443, telles que décrites en référence à la figure 4. On peut démarrer l'incrémentation à partir d'une amplitude de modulation initiale faible, par exemple 0,5% à 5% de $U_E$. Par exemple, soit $U_E$ égal à 3 V, l'amplitude de modulation initiale vaut 25 mV.

Si $U_E$ est inférieure à $U_{Einv}$, la LED présente le second comportement tel que défini ci-avant. On met alors en oeuvre les étapes 460, 461, 462 et 463, telles que décrites en référence à la figure 4. On peut démarrer l'incrémentation à partir d'une amplitude de modulation initiale élevée, par exemple 30% à 15% de $U_E$. Par exemple, soit $U_E$ égal à 3 V, l'amplitude de modulation initiale vaut 0,5 V.

Si $U_E$ est égale à $U_{Einv}$, la LED présente le troisième comportement tel que défini ci-avant. Le rapport signal sur bruit ne dépend pas de l'amplitude du signal de modulation. Aucun ajustement n'est alors nécessaire. On met directement en oeuvre l'étape 450 telle que décrite en référence à la figure 4. On peut éviter de fixer $U_E$ proche à plus de 5% près de $U_{Einv}$, afin que la LED présente un comportement tel qu'un ajustement de l'amplitude de modulation soit possible.

Ce procédé présente l'avantage de nécessiter un nombre de calculs et mesures encore réduit en comparaison avec le procédé décrit en référence à la figure 4. En effet, au lieu de mesurer et comparer trois rapports signal sur bruit, une simple comparaison avec $U_{Einv}$ suffit pour déterminer comment l'ajustement doit se poursuivre.

Ce procédé suppose que la première valeur d'inversion $U_{Einv}$ soit connue.

Le procédé peut donc comprendre une étape, non représentée, de détermination de la première valeur d'inversion $U_{Einv}$.

$U_{Einv}$ peut être déterminée expérimentalement, en faisant varier la valeur de $U_E$ jusqu'à atteindre une valeur de $U_E$ telle que le rapport signal sur bruit ne dépend pas de l'amplitude de modulation. En variante, $U_{Einv}$ est déterminé par d'autres méthodes qui vont être décrites dans la suite.

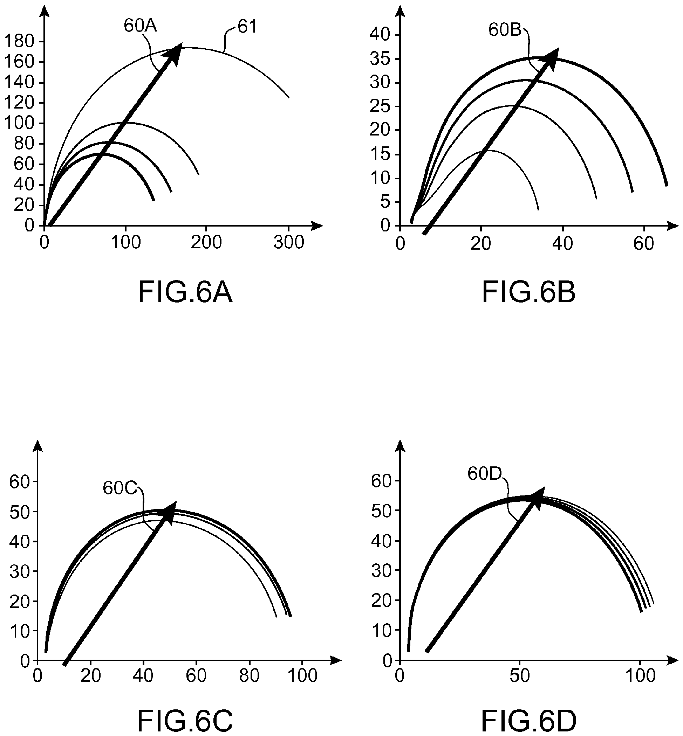

Les figures 6A à 6D illustrent des mesures d'impédance d'une LED, pour différentes valeurs de la composante continue de sa tension d'alimentation, et pour une fréquence allant de 75 kHz à 10 MHz. On a utilisé la même LED que pour les mesures illustrées en figures 1 à 3. Les mesures d'impédance visent à caractériser l'impédance Z de la LED. L'axe des abscisses correspond à la partie réelle de l'impédance Z. L'axe des ordonnées correspond à l'opposé de la partie imaginaire de l'impédance Z. Chaque courbe 61 peut être nommée spectre d'impédance, ou mesure d'impédance.

Sur la figure 6A, la composante continue de la tension d'alimentation de la LED est égale à 2,30 V. Comme précisé en référence aux figures 1 à 3, la LED présente alors le second comportement, tel que le rapport signal sur bruit augmente lorsque l'amplitude de modulation diminue. Chacune des courbes présente une forme de demi-cercle. En considérant les courbes par rayon croissant du demi-cercle, celles-ci correspondent respectivement à une amplitude de modulation de 1,41 V ; 0,99 V ; 0,71 V ; 0,42 V (soient des valeurs efficace égales respectivement à 1 V ; 0,7 V ; 0,5 V ; 0,3 V. Il existe un facteur $\sqrt{2}$ entre la valeur efficace d'un signal sinusoïdal et son amplitude de modulation). La flèche 60A illustre l'augmentation du rapport signal sur bruit.

Sur la figure 6B, la composante continue de la tension d'alimentation de la LED est égale à 3,00 V. Comme précisé en référence aux figures 1 à 3, la LED présente alors le premier comportement, tel que le rapport signal sur bruit augmente lorsque l'amplitude de modulation augmente. En considérant les courbes par rayon croissant du demi-cercle, celles-ci correspondent respectivement à une amplitude de modulation de 0,42 V ; 0,71 V ; 0,99 V ; 1,41 V (soient des valeurs efficace égales respectivement à 0,3 V ; 0,5 V ; 0,7 V ; 1V). La flèche 60B illustre l'augmentation du rapport signal sur bruit.

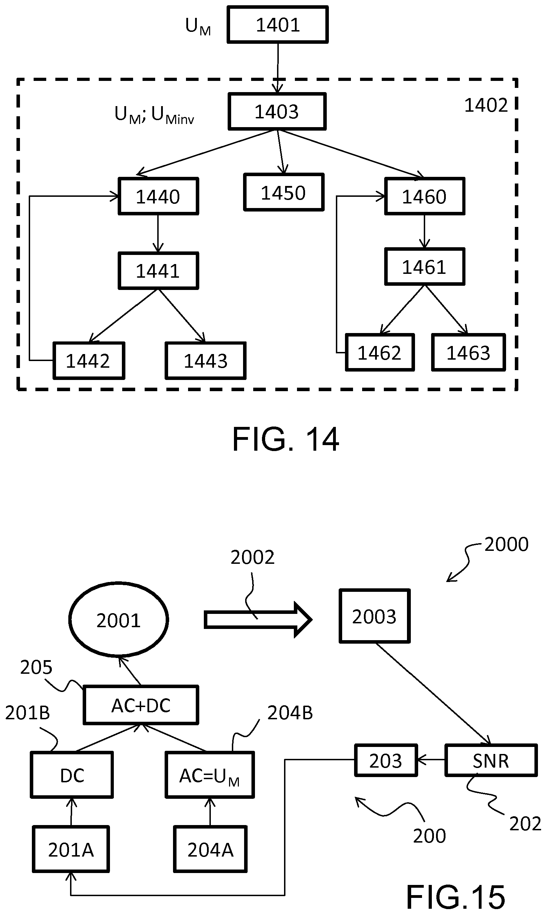

Sur la figure 6C, la composante continue de la tension d'alimentation de la LED est égale à 2,60 V. En considérant les courbes par rayon croissant du demi-cercle, celles-ci correspondent respectivement à une amplitude de modulation de 0,42 V ; 0,71 V ; 0,99 V ; 1,41 V (soient des valeurs efficace égales respectivement à 0,3 V ; 0,5 V ; 0,7 V ; 1 V). On voit cependant que les courbes sont des demi-cercles qui présentent tous sensiblement le même rayon. La différence en rayon entre le demi-cercle de rayon maximum et celui de rayon minimum est d'environ 5Ω, alors que cette différence est de l'ordre de 100Ω en figure 6A, et 15Ω en figure 6B. La flèche 60C illustre l'augmentation du rapport signal sur bruit.

Sur la figure 6D, la composante continue de la tension d'alimentation de la LED est égale à 2,55 V. En considérant les courbes par rayon croissant du demi-cercle, celles-ci correspondent respectivement à une amplitude de modulation de 1,41 V ; 0,99 V ; 0,71 V ; 0,42 V (soient des valeurs efficace égales respectivement à 1 V ; 0,7 V ; 0,5 V ; 0,3 V). On voit cependant que les courbes sont des demi-cercles qui présentent tous sensiblement le même rayon. La différence en rayon entre le demi-cercle de rayon maximum et celui de rayon minimum est d'environ 5Ω. La flèche 60D illustre l'augmentation du rapport signal sur bruit.

La première tension d'inversion est celle qui impose que le rayon du demi-cercle correspondant au spectre d'impédance (ou mesure d'impédance) de la LED est indépendant de l'amplitude de modulation. On déduit des figures 6A à 6D que la première valeur d'inversion est comprise entre 2,55V et 2,60V. On retient par exemple la moyenne de ces deux tensions, soit 2,57V.

On observe également d'après les figures 6A à 6D, que le meilleur rapport signal à bruit est obtenu ici pour de grands rayons du spectre d'impédance (ou mesure d'impédance) de la LED, c'est-à-dire pour de grandes valeurs de la résistance équivalente de la LED. Or, l'homme du métier est habituellement incité, lorsqu'il polarise une LED, à rechercher la résistance dynamique la plus faible possible, de façon à augmenter le flux lumineux émis, dans la gamme de fonctionnement classique de la LED.

De la même façon, on pourrait montrer qu'une évolution du paramètre utile traduisant une amélioration de la qualité de transmission du signal utile, correspond ici à de grandes valeurs de la résistance équivalente de la LED.

On peut mesurer de la même façon un premier courant d'inversion, à partir de mesures d'impédance réalisées pour différentes valeurs de la composante continue du courant d'alimentation.

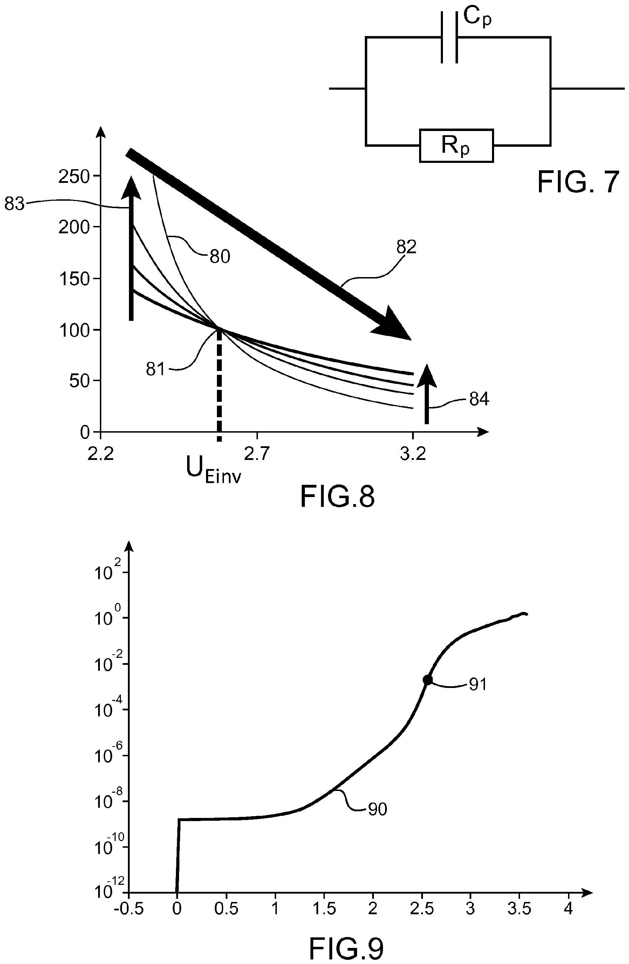

Puisque les spectres d'impédance de la LED présentent une forme de demi-cercle unique, la LED peut être modélisée par un circuit équivalent constitué d'une résistance $R_p$ en parallèle avec une capacité $C_p$. Ce circuit équivalent est illustré en figure 7. A partir de ce modèle équivalent, on peut exprimer les valeurs de $R_p$ et $C_p$ en fonction de la partie imaginaire de Z, Im(Z), et de la partie réelle de Z, Re(Z) :

$$R_p = Re(Z) + \frac{[Im(Z)]^2}{Re(Z)}$$

$$C_p = -\frac{1}{2\pi f}\frac{Im(Z)}{[Re(Z)]^2 + [Im(Z)]^2}$$

La figure 8 illustre des courbes 80 représentant la résistance équivalente $R_p$, en fonction de la composante continue de la tension d'alimentation de la LED. La flèche 82 traduit l'augmentation de l'intensité moyenne du flux lumineux émis par la LED. La figure 8 est réalisée pour une fréquence fixe de la modulation, ici 0,1 MHz.

Chaque courbe correspond à une amplitude de modulation de la tension d'alimentation. En considérant les courbes de bas en haut, et du côté de l'axe des ordonnées, celles-ci correspondent respectivement à une amplitude de modulation de 1,41 V ; 0,99 V ; 0,71 V ; 0,42 V (soient des valeurs efficace égales respectivement à 1 V ; 0,7 V ; 0,5 V ; 0,3 V).

Les différentes courbes se croisent en un point 81 tel que la résistance équivalente de la LED ne dépend pas de l'amplitude de modulation. L'abscisse de ce point correspond à la première valeur d'inversion $U_{Einv}$. On mesure ainsi $U_{Einv} \approx 2,55$ V, ce qui est cohérent avec la méthode exposée en référence aux figures 6A à 6D.

A gauche de ce point, le rapport signal sur bruit augmente lorsque l'amplitude de modulation diminue (flèche 83). A droite de ce point, le rapport signal sur bruit augmente avec l'amplitude de modulation (flèche 84).

On remarque que dans les deux cas illustrés ici, l'augmentation du rapport signal sur bruit correspond à une augmentation de la résistance équivalente de la LED. Une telle observation est contre-intuitive pour l'homme du métier, qui s'attend généralement à ce qu'une augmentation du rapport signal sur bruit corresponde à une diminution de la résistance équivalente d'une LED.

De la même façon, on pourrait montrer que dans ces mêmes conditions, l'évolution de tout autre paramètre utile dans le sens d'une amélioration de la qualité de transmission du signal utile, correspond à une augmentation de la résistance équivalente de la LED.

On pourrait mesurer de la même façon le premier courant d'inversion, à partir d'un modèle équivalent de la LED établi à partir de spectres d'impédance (ou mesures d'impédance) faisant varier la composante continue du courant d'alimentation de la LED.

La figure 9 illustre le logarithme décimal de l'intensité du courant passant par la LED, log(I), en fonction de $U_E$, où $U_E$ est sa tension d'alimentation, en Volt ($U_E$ est ici une tension continue, sans composante alternative). Il s'agit d'une courbe caractéristique d'une LED, généralement fournie par le fabricant. Cette courbe 90 présente un point d'inflexion 91, dont l'abscisse correspond sensiblement (à quelques pourcents près) à la première tension d'inversion $U_{Einv}$.

On peut positionner ce point d'inflexion en calculant la dérivée seconde de $U_E$ relativement à log(I) : $\frac{d^2 U_E}{d(\log(I))^2}$. La valeur de $U_E$ pour laquelle cette dérivée seconde s'annule correspond à $U_{Einv}$. On obtient par cette méthode $U_{Einv} = 2,54$V, ce qui est cohérent avec les autres méthodes proposées. En variante, on calcule la dérivée première de $U_E$ relativement à log(I) : $\frac{d U_E}{d(\log(I))}$. Sur une courbe représentant cette dérivée première en fonction de $U_E$, on recherche le point tel que la dérivée diminue avant ce point, et augmente après ce point.

De telles méthodes de détermination de $U_{Einv}$ ont pour inconvénient que des artéfacts de la courbe 90 peuvent rendre la détermination de $U_{Einv}$ difficile. Il peut être utile d'identifier une gamme de tensions dans laquelle on s'attend à trouver la première tension d'inversion.

Néanmoins, ces méthodes ont pour avantage d'exploiter directement une courbe caractéristique fournie par le constructeur de la LED, et ne nécessitent donc aucune mesure supplémentaire particulière.

Si l'on cherche le premier courant d'inversion, il suffit de s'intéresser à l'ordonnée du point 91 et non plus à son abscisse.

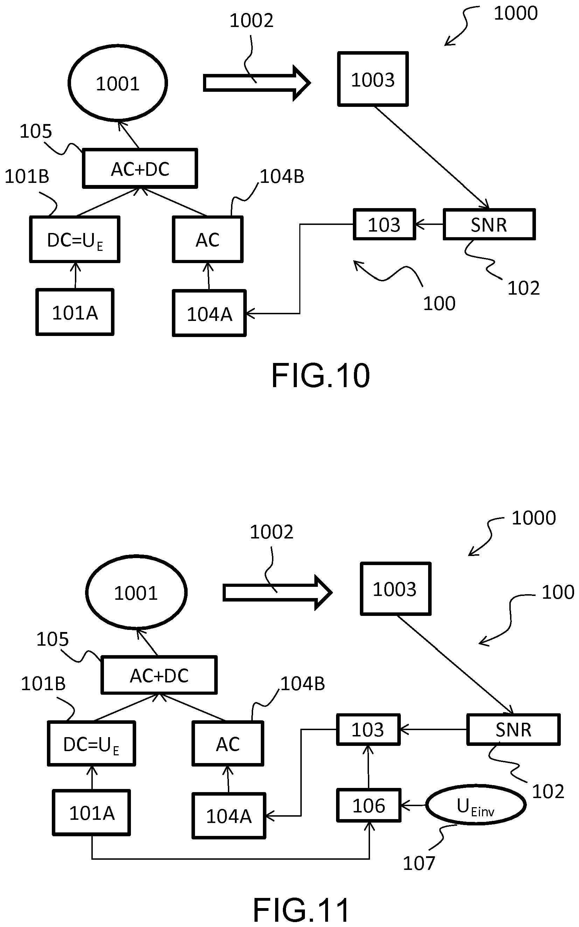

On va maintenant décrire, en référence aux figures 10 à 12, plusieurs exemples de modules d'optimisation et systèmes de communications adaptés à mettre en oeuvre un procédé selon l'invention.

Comme pour l'illustration du procédé selon l'invention, et par souci de synthèse, on choisit de développer uniquement l'exemple d'un ajustement en tension à partir d'une mesure du rapport signal sur bruit.

De nombreuses variantes peuvent être envisagées sans sortir du cadre de la présente invention, en réalisant un ajustement en courant et/ou en utilisant un autre paramètre, dit utile, tel que défini précédemment.

Selon le paramètre utile choisi, l'ajustement selon l'invention consiste à augmenter ou à diminuer la valeur de ce paramètre. Comme précisé ci-avant, selon le paramètre choisi, le paramètre utile est mesuré sur l'un ou l'autre signal correspondant au signal utile.

La figure 10 illustre de manière schématique un premier mode de réalisation d'un module d'optimisation 100 et système de communication 1000 selon l'invention.

Le système de communication 1000 comprend des moyens d'émission 1001 formés par une LED, de préférence une LED émettant de la lumière blanche. Pendant toute l'étape d'ajustement telle que décrite dans la suite, la LED fournit avantageusement un signal prédéterminé, comme précisé en référence à la figure 4.

Le flux lumineux 1002 émis par la LED 1001 est reçu par un photodétecteur 1003. Le photodétecteur 1003 est adapté à transformer le signal lumineux reçu en un signal électrique. Il s'agit ici, par exemple, d'une photodiode à avalanche. On pourra utiliser tout autre type de photodétecteur. Des détails sur le photodétecteur sont donnés en référence à la figure 4, notamment dans le cas où le paramètre utile est mesuré sur un signal représentatif de la décomposition spectrale du signal utile.

Dans un système de communication complet, le photodétecteur 1003 est relié à des moyens de calcul adaptés à exploiter le signal fourni par le photodétecteur pour en extraire l'information encodée à l'émission. Le photodétecteur 1003 peut comprendre une fonction de filtrage pour ne conserver que la composante alternative d'un signal reçu.

Le module d'optimisation 100 tel que représenté en figure 10 est adapté à mettre en oeuvre le procédé tel que décrit en référence à la figure 4.

Le module d'optimisation 100 comprend :

- un variateur d'intensité 101A, c'est-à-dire des moyens d'interface homme machine avec un module DC dédié 101B, pour commander la valeur de la composante continue de la tension d'alimentation de la LED. On fixe ainsi une tension DC à la valeur $U_E$ ;

- des moyens de traitement du signal 102, reliés au photodétecteur 1003. Les moyens de traitement du signal 102 reçoivent le signal électrique fourni par le photodétecteur en réponse à la réception d'un signal lumineux émis par la LED et reçu par le photodétecteur. Les moyens de traitement du signal sont agencés pour mesurer le rapport signal sur bruit du signal utile, noté SNR.

- des moyens d'ajustement 103, reliés aux moyens de traitement du signal 102 et recevant en entrée le rapport signal sur bruit ; et

- des moyens de commande 104A, recevant en entrée un signal de pilotage provenant des moyens d'ajustement 103, et adaptés à modifier l'amplitude de modulation de la composante alternative de la tension d'alimentation. Les moyens de commande pilotent en particulier un module AC 104B. Le module AC 104B fournit un signal analogique dans lequel des données à transmettre sont encodées. Les moyens de commande 104A permettent de modifier l'amplitude de modulation de ce signal analogique. Un module 105 est relié en entrée aux modules 101B et 104B, et en sortie à la LED 1001. Le module 105 somme les signaux fournis par chacun des deux modules 101B et 104B, pour fournir la tension d'alimentation AC+DC de la LED 1001.

Le module DC peut être un générateur de tension, un générateur de courant, ou un simple générateur de fonction.

Le module AC reçoit en entrée des données à transmettre (par exemple sous la forme d'un signal numérique), et fournit en sortie un signal alternatif analogique. Le module AC comprend avantageusement un générateur de fonction. Ce générateur de fonction peut être couplé à un générateur de tension ou de courant, pour fournir *in fine* une tension alternative ou un courant alternatif. Le module AC 104B peut former des moyens d'encodage de données, adaptés à encoder les données numériques d'une source de données (par exemple internet) sous la forme d'un signal analogique.

Le module 105 peut sommer des tensions, sommer des courants, sommer des fonctions, sommer une fonction et une tension, sommer une fonction et un courant. Le module 105 fournit *in fine* le signal d'alimentation de la LED, présentant une composante continue et une composante alternative. Le module 105 comprend notamment un élément dit « bias tee » (terme anglais désignant un circuit électrique pour sommer un signal AC et un signal DC).

Les moyens de commande 104A sont reliés aux moyens d'ajustement 103 par une voie retour. La voie retour consiste notamment en des moyens de communication, en particulier des moyens de communication par infrarouge, par Bluetooth, par LiFi, etc. Il existe donc une liaison bidirectionnelle entre un bloc comprenant la LED, le module AC, le module DC, le module 105, le variateur d'intensité 101A, et les moyens de commande 104A, et un bloc comprenant la photodiode, les moyens de traitement du signal 102, et les moyens d'ajustement 103.

On a détaillé en référence à la figure 4 des exemples de méthodes pour mesurer un rapport signal sur bruit.

Les moyens de traitement du signal 102 peuvent comprendre une liaison avec le module AC 104B, pour définir ou détecter les caractéristiques du signal lumineux émis par la LED.

Les moyens d'ajustement 103 sont des moyens de calcul adaptés à piloter les moyens de commande 104A pour modifier la valeur de l'amplitude de modulation, de façon à augmenter le rapport signal sur bruit. En particulier, les moyens d'ajustement 103 sont adaptés à piloter les moyens de commande 104A de façon à obtenir, *in fine,* un rapport signal sur bruit maximum.

Une fois que le module d'ajustement 100 a permis d'atteindre le rapport signal sur bruit amélioré, pour la valeur choisie de $U_E$, on fixe la valeur correspondante de l'amplitude de modulation de la composante alternative de la tension d'alimentation, et on exploite le système LiFi ainsi paramétré. En particulier, on exploite le signal fourni par le photodétecteur 1003 pour en extraire l'information encodée à l'émission.

Le module d'optimisation 100 peut comprendre des moyens recevant en entrée la valeur fixée de $U_E$, agencés pour calculer une valeur de l'incrément P et de l'amplitude de modulation initiale $U_0$. On a explicité en référence à la figure 4 des relations possibles entre ces valeurs. Ces relations sont inchangées si l'on travaille sur un courant d'alimentation. Il suffit de remplacer chaque tension par un courant correspondant.

Le système de communication Li-Fi peut comprendre un module de plusieurs LED émettant à différentes longueurs d'onde, la somme des spectres optiques donnant une lumière blanche. Dans ce cas, l'amplitude de modulation de chaque LED du module de LED est optimisée individuellement.

Selon une variante non représentée, le paramètre utile est un taux d'erreur binaire, un taux d'erreur paquet ou un taux d'erreur trame. Dans ce cas, le module d'optimisation selon l'invention comprend les moyens de calcul adaptés à exploiter le signal fourni par le photodétecteur pour en extraire l'information encodée à l'émission. Les moyens de traitement du signal 102 sont reliés à ces moyens de calcul pour recevoir un signal électrique correspondant au signal électrique reçu par la photodiode, puis décodé. Les moyens d'ajustement 103, sont reliés aux moyens de traitement du signal 102 et reçoivent en entrée le taux d'erreur binaire ou le taux d'erreur paquet ou le taux d'erreur trame. Les moyens de traitement du signal peuvent comprendre une liaison avec le module AC, pour définir ou détecter l'information encodée dans le signal lumineux émis par la LED.

La figure 11 illustre de manière schématique une première variante du module d'optimisation 100 et du système de communication 1000 tels que décrits en référence à la figure 10.

Dans l'exemple représenté en figure 11, le module d'optimisation 100 est adapté à mettre en oeuvre le procédé tel que décrit en référence à la figure 5.

Le module d'optimisation 100 illustré en figure 11 diffère du module d'optimisation illustré en figure 10 en ce qu'il comprend des moyens de comparaison 106, recevant en entrée la valeur de $U_E$ fixée grâce au variateur d'intensité 101A, et la valeur $U_{Einv}$ de la première tension d'inversion, stockée dans une mémoire 107. Les moyens de comparaison 106 sont adaptés à comparer $U_E$ et $U_{Einv}$, et à piloter les moyens d'ajustement 103 pour que ces derniers adaptent l'ajustement au résultat de la comparaison, selon le procédé d'ajustement tel que décrit en référence à la figure 5.

La valeur de $U_{Einv}$ peut être déterminée par l'une des méthodes décrites en référence aux figures 6A à 9, puis stockée dans la mémoire 107.

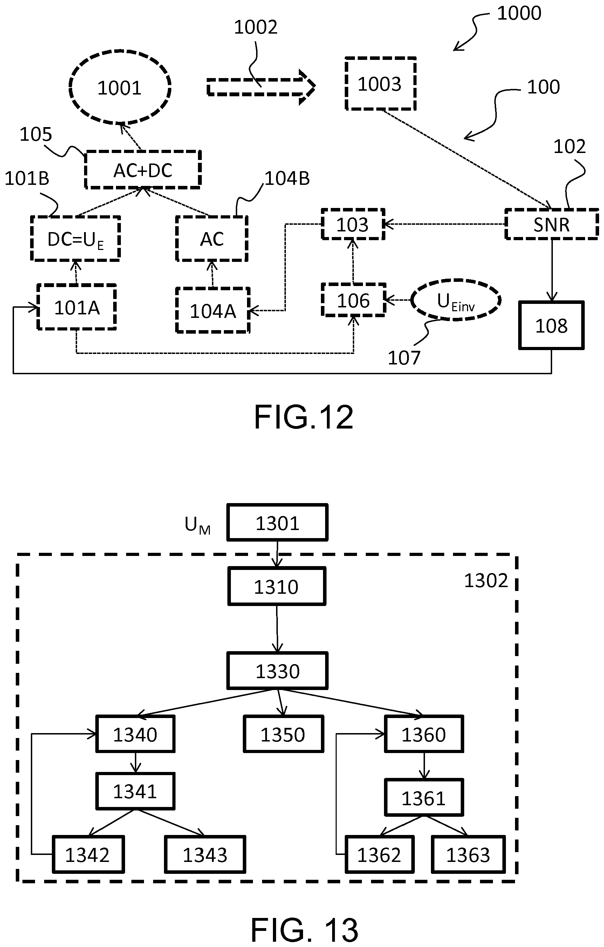

La figure 12 illustre de manière schématique une deuxième variante du module d'optimisation 100 et système de communication 1000 illustrés en figure 10. Le module d'optimisation 100 de la figure 12 ne diffère du module d'optimisation de la figure 11, qu'en ce qu'il comprend des moyens 108 pour déterminer la valeur de $U_{Einv}$. Pour des raisons de lisibilité de la figure, on a représenté en pointillés les éléments de la figure 11 que l'on retrouve sur la figure 12, afin d'identifier facilement les différences entre ces deux figures.

Les moyens 108 pour déterminer la valeur de $U_{Einv}$ reçoivent en entrée le rapport signal sur bruit calculée par les moyens de traitement du signal 102, et pilotent le variateur d'intensité 101A pour modifier composante continue $U_E$ du signal d'alimentation. On obtient la valeur de $U_{Einv}$ en faisant varier la valeur de $U_E$ jusqu'à atteindre une valeur de $U_E$ telle que le rapport signal sur bruit ne dépend pas de la valeur de l'amplitude de modulation. Pour des raisons de clarté de la figure, on n'a pas représenté en figure 12 le pilotage des moyens de commande 104A par les moyens 108, permettant de faire varier l'amplitude de modulation, pour chaque valeur de $U_E$. Pour la même raison, on n'a pas représenté la liaison entre les moyens 108 et la mémoire 107, correspondant au stockage de la valeur de $U_{Einv}$ dans la mémoire 107, une fois déterminée par les moyens 108.

On va maintenant décrire un second mode de réalisation de procédé et de système selon l'invention, visant également à optimiser un débit de transmission de données dans un système Li-Fi en exploitant les propriétés illustrées aux figures 1 à 3.

En effet, on a pu établir un lien entre la composante continue du signal d'alimentation de la LED, l'amplitude de modulation de la composante alternative de ce signal d'alimentation, et le paramètre utile tel que défini ci-avant.

On a donc proposé un procédé et un module d'optimisation, dans lesquels on fixe la valeur de la composante continue du signal d'alimentation en fonction d'un besoin en éclairage, puis on ajuste l'amplitude de modulation de la composante alternative du signal d'alimentation pour optimiser le débit. En variante, et de façon symétrique, on propose également un procédé et un module d'optimisation, dans lesquels on fixe l'amplitude de modulation de la composante alternative du signal d'alimentation de la LED puis on ajuste la valeur de la composante continue de ce signal d'alimentation, pour optimiser le débit.

On fixe l'amplitude de modulation de la composante alternative du signal d'alimentation de la LED, par exemple en fonction d'un besoin en communication (notamment un besoin en portée du signal, ou un débit minimum à assurer).

De la même façon qu'il existe une première valeur d'inversion (par exemple notée $U_{Einv}$), distinguant deux comportements de la LED et correspondant à une valeur particulière de la composante continue du signal d'alimentation, il existe une deuxième valeur d'inversion (par exemple notée $U_{Minv}$), séparant deux comportements de la LED et correspondant à une valeur particulière de la composante alternative du signal d'alimentation. Cette deuxième valeur d'inversion sépare :

- un premier comportement, tel que la qualité de transmission du signal émis par la LED et reçu par le photodétecteur augmente lorsque la composante continue du signal d'alimentation augmente (et inversement) ; et
- un second comportement, tel que la qualité de transmission du signal émis par la LED et reçu par le photodétecteur augmente lorsque la composante continue du signal d'alimentation diminue (et inversement).

La deuxième valeur d'inversion pourra être obtenue par des procédés similaires à ceux décrits à propos de la première valeur d'inversion.

Cette variante est avantageuse pour des applications dans lesquelles on ne recherche pas une intensité particulière de l'éclairage. Par exemple, les moyens d'émission du système Li-Fi peuvent être les LED d'un écran à LED ou d'un écran de téléphone intelligent possédant des LEDs. La fonction première d'un écran n'est pas l'éclairage. On peut donc ajuster la composante continue du signal d'alimentation de la LED, sans impacter la fonction principale de celle-ci, qui n'est pas l'éclairage mais un simple affichage d'image pouvant impliquer une large gamme d'intensités lumineuses.

Comme précédemment, et par souci de synthèse, on choisit de développer uniquement l'exemple d'un ajustement en tension à partir d'une mesure du rapport signal sur bruit. De nombreuses variantes peuvent être envisagées sans sortir du cadre de la présente invention, en réalisant un ajustement en courant et/ou en utilisant un autre paramètre caractéristique de la qualité de transmission du signal utile.

La figure 13 illustre de manière schématique le deuxième mode de réalisation de procédé selon l'invention.

L'étape initiale 1301 consiste à fixer la valeur $U_M$ de l'amplitude de modulation de la composante alternative de la tension d'alimentation de la LED.

L'ajustement 1302 est ensuite similaire à l'ajustement 402 de la figure 4, excepté le fait que l'on ajuste par incréments successifs la composante continue de la tension d'alimentation, et non l'amplitude de modulation.

Les étapes 1310, 1330, 1340, 1350, 1360, 1341, 1361, 1342, 1343, 1362, 1363 correspondent respectivement aux étapes 410, 430, 440, 450, 460, 441, 461, 442, 443, 462, 463 du procédé de la figure 4, en remplaçant :

- l'amplitude de modulation initiale $U_0$ décrite en référence à la figure 4, par une composante continue initiale $U_{E0}$ ; et
- l'incrément de modulation P décrit en référence à la figure 4, par un incrément de tension continue P'.

On choisit de préférence une valeur initiale $U_{E0}$ pour la composante continue, en fonction de l'amplitude de modulation $U_M$ de la composante alternative de la tension d'alimentation. Par exemple, cette valeur initiale $U_{E0}$ est comprise entre 3 et 50 fois la valeur de $U_M$, notamment entre 3 et 20 fois la valeur de $U_M$, par exemple 7 fois la valeur de $U_M$.

On choisit de préférence la valeur de l'incrément P' en fonction de la valeur initiale $U_{E0}$ de la composante continue. Par exemple, cet incrément P' est compris entre 0,5% et 5% de $U_{E0}$, notamment entre 1% et 3%, par exemple 2%.

La figure 14 illustre une variante du procédé illustré en référence à la figure 13. Ce procédé diffère du procédé de la figure 13, en ce que l'ajustement 1402 est cette fois similaire à l'ajustement 502 de la figure 5, excepté le fait que l'on ajuste par incréments successifs la composante continue de la tension d'alimentation, et non l'amplitude de modulation.

Les étapes 1403, 1440, 1450, 1460, 1441, 1461, 1442, 1443, 1462, 1463 correspondent respectivement aux étapes 503, 440, 450, 460, 441, 461, 442, 443, 462, 463 du procédé de la figure 5, en remplaçant :

- l'amplitude de modulation initiale $U_0$, par une composante continue initiale $U_{E0}$ ;
- l'incrément de modulation P, par un incrément de tension continue P' ; et
- la première tension d'inversion $U_{Einv}$ par la deuxième valeur d'inversion $U_{Minv}$.

La figure 15 illustre de manière schématique un deuxième mode de réalisation d'un module d'optimisation et système de communication selon l'invention.

Les références numériques 2000, 200, 2001, 2002, 2003, 202, 205, 204B, 201B correspondent aux références numériques 1000, 100, 1001, 1002, 1003, 102, 105, 104B, 101B de la figure 10.

Le module d'optimisation 200 de la figure 15 diffère du module d'optimisation 100 de la figure 10, en ce qu'il est adapté à mettre en oeuvre le procédé tel que décrit en référence à la figure 13.

Le module d'optimisation 200 comprend :

- un variateur d'amplitude de modulation 204A, c'est-à-dire des moyens d'interface homme machine avec le module AC 204B. Le variateur d'amplitude de modulation 204A fixe la valeur de l'amplitude de modulation de la composante alternative de la tension d'alimentation de la LED. On fixe ainsi une amplitude de modulation d'une tension AC à la valeur $U_M$ ;
- des moyens de traitement du signal 202 ;
- des moyens d'ajustement 203, reliés aux moyens de traitement du signal 202 et recevant en entrée le rapport signal sur bruit mesuré par les moyens de traitement du signal 202 ; et
- des moyens de commande 201A, recevant en entrée un signal de pilotage provenant des moyens d'ajustement 203, et adaptés à piloter le module DC 201B pour modifier la composante continue de la tension d'alimentation.

Les moyens d'ajustement 203 sont des moyens de calcul adaptés à piloter les moyens de commande 201A, pour modifier la valeur de la composante continue, de façon à obtenir un meilleur rapport signal sur bruit, notamment un rapport signal sur bruit maximum.

Une fois que le module d'ajustement 200 a permis d'atteindre le rapport signal sur bruit amélioré, pour la valeur choisie de $U_M$, on fixe la valeur correspondante de la composante continue de la tension d'alimentation, et on exploite le signal fourni par le photodétecteur 2003 pour en extraire l'information encodée à l'émission.

On pourra prévoir différentes variantes du module 200, sur le modèle des modules 100 illustrés en figures 11 et 12, notamment des modules adaptés à mettre en oeuvre le procédé de la figure 14.

Le module 200 peut comprendre des moyens de comparaisons entre $U_M$ et $U_{Minv}$. Une telle variante comprend le cas échéant des moyens pour déterminer la valeur de $U_{Minv}$. Ces moyens reçoivent en entrée le rapport signal sur bruit du signal utile, et pilotent le variateur d'amplitude de modulation 204A pour modifier par incréments successifs l'amplitude de modulation, jusqu'à atteindre une valeur de $U_M$ telle que le rapport signal sur bruit ne dépend pas de la valeur de la composante continue de la tension d'alimentation de la LED.

L'invention présente de nombreuses applications. Elle peut être adaptée à tout système d'éclairage préexistant, dans lequel une LED est reliée à un variateur d'intensité. Un tel système est par exemple présent dans divers écrans tels que des écrans d'ordinateur, de télévision, de tablette tactile, de téléphone intelligent, etc.

**Revendications**

1. Procédé d'augmentation de la qualité de transmission d'un signal en vue d'optimiser un débit de données, dans un système de communication sans fil (1000) comprenant une diode électroluminescente (1001) formant des moyens d'émission adaptés à émettre dans la partie visible du spectre électromagnétique, ladite diode électroluminescente (1001) étant alimentée par un signal d'alimentation comprenant une composante continue ($U_E$) et une composante alternative, le procédé comprenant les étapes suivantes :

   - fixation (401) d'une valeur de la composante continue ($U_E$) du signal d'alimentation ;
   - ajustement (402) d'une amplitude de modulation de la composante alternative du signal d'alimentation, à partir d'une mesure d'un paramètre dit utile, représentatif de la qualité de transmission d'un signal dit utile, le signal utile correspondant à un signal lumineux émis par la diode électroluminescente (1001) et reçu par un photodétecteur (1003) formant des moyens de réception du système de communication sans fil ;

   **caractérisé en ce que** l'ajustement (402) d'une amplitude de modulation comprend les étapes suivantes :

   - une étape initiale de mesure (410) des valeurs du paramètre utile (SNR0, SNR1, SNR2) obtenues pour une amplitude de modulation initiale ($U_0$), pour cette amplitude de modulation initiale plus un incrément d'amplitude de modulation ($U_0$+P), et pour cette amplitude de modulation initiale moins ledit incrément ($U_0$-P) ;
   - une recherche (430) de la valeur du paramètre utile correspondant à la meilleure qualité de transmission du signal utile, parmi lesdites valeurs du paramètre utile mesurées, dite extremum local ;
   - lorsque cet extremum local ne correspond pas à l'amplitude de modulation initiale, poursuite de l'ajustement, en augmentant (440) l'amplitude de modulation si l'extremum local correspond à l'amplitude de modulation initiale plus ledit incrément, ou en diminuant (460) l'amplitude de modulation si l'extremum local correspond à l'amplitude de modulation initiale moins ledit incrément.

2. Procédé d'augmentation de la qualité de transmission d'un signal en vue d'optimiser un débit de données, dans un système de communication sans fil (1000) comprenant une diode électroluminescente (1001) formant des moyens d'émission adaptés à émettre dans la partie visible du spectre électromagnétique, ladite diode électroluminescente (1001) étant alimentée par un signal d'alimentation comprenant une composante continue (U$_E$) et une composante alternative, le procédé comprenant les étapes suivantes :

- fixation (401) d'une valeur de la composante continue (U$_E$) du signal d'alimentation ;
- ajustement (502) d'une amplitude de modulation de la composante alternative du signal d'alimentation, à partir d'une mesure d'un paramètre dit utile, représentatif de la qualité de transmission d'un signal dit utile, le signal utile correspondant à un signal lumineux émis par la diode électroluminescente (1001) et reçu par un photodétecteur (1003) formant des moyens de réception du système de communication sans fil ;

**caractérisé par** une étape de comparaison (503) entre la composante continue (U$_E$) du signal d'alimentation, et une première valeur d'inversion (U$_{Einv}$) séparant deux comportements de la diode électroluminescente (1001) :

- un premier comportement tel que l'évolution de la valeur du paramètre utile traduit une amélioration de la qualité de transmission du signal utile, lorsque l'amplitude de modulation augmente ; et
- un second comportement tel que l'évolution de la valeur du paramètre utile traduit une diminution de la qualité de transmission du signal utile, lorsque l'amplitude de modulation augmente ;

l'ajustement (502) de l'amplitude de modulation mettant en oeuvre au moins un incrément positif (440) ou négatif (460) selon que la diode électroluminescente (1001) présente le premier ou le second comportement.

3. Procédé selon la revendication 2, **caractérisé par** une étape initiale de détermination de la première valeur d'inversion (U$_{Einv}$).

4. Procédé selon la revendication 3, **caractérisé en ce que** la détermination de la première valeur d'inversion (U$_{Einv}$) met en oeuvre des mesures de spectres d'impédance (61) de la diode électroluminescente (1001), pour différentes valeurs de la composante continue (U$_E$) du signal d'alimentation, la première valeur d'inversion (U$_{Einv}$) séparant deux comportements de la diode électroluminescente (1001) :

- un premier comportement tel que le rayon du spectre d'impédance (61) augmente avec l'amplitude de modulation ; et
- un second comportement tel que le rayon du spectre d'impédance (61) augmente lorsque l'amplitude de modulation diminue.

5. Procédé selon la revendication 3, **caractérisé en ce que** la détermination de la première valeur d'inversion (U$_{Einv}$) met en oeuvre une recherche du point d'intersection (81) de plusieurs courbes (80) représentant la résistance équivalente (R$_p$) de la diode électroluminescente (1001) en fonction de la composante continue (U$_E$) de son signal d'alimentation.

6. Procédé selon la revendication 3, **caractérisé en ce que** la détermination de la première valeur d'inversion (U$_{Einv}$) met en oeuvre une recherche d'un point d'inflexion (91) sur une courbe (90) représentative du logarithme de l'intensité du courant traversant la diode électroluminescente (1001) en fonction d'une tension continue d'alimentation.

7. Procédé selon l'une quelconque des revendications 1 à 6, **caractérisé en ce que** l'ajustement est réalisé par incréments successifs.

8. Procédé selon l'une quelconque des revendications 1 à 7, **caractérisé en ce que** le paramètre représentatif de la qualité de transmission du signal utile est un rapport signal sur bruit ou un taux d'erreur binaire ou un taux d'erreur paquet ou un taux d'erreur trame.

9. Procédé d'augmentation de la qualité de transmission d'un signal pour optimiser un débit de données, dans un système de communication sans fil (1000) comprenant une diode électroluminescente (1001) formant des moyens d'émission adaptés à émettre dans la partie visible du spectre électromagnétique, ladite diode électroluminescente (1001) étant alimentée par un signal d'alimentation comprenant une composante continue (U$_E$) et une composante alternative, le procédé comprenant les étapes suivantes :

- fixation (1301) d'une amplitude de modulation (U$_M$) de la composante alternative du signal d'alimentation ; et
- ajustement (1302) de la composante continue du signal d'alimentation, à partir d'une mesure d'un paramètre dit utile, représentatif de la qualité de transmission d'un signal dit utile, le signal utile correspondant à un signal lumineux émis par la diode électroluminescente (1001) et reçu par un photodétecteur (1003) formant des moyens de réception du système de communication sans fil ;

**caractérisé en ce que** l'ajustement (1302) de la composante continue du signal d'alimentation comprend les étapes suivantes :

- une étape initiale de mesure (1310) des valeurs du paramètre utile obtenues pour une composante continue initiale, pour cette composante continue initiale plus un incrément de composante continue, et pour cette composante continue initiale moins ledit incrément ;

- une recherche (1330) de la valeur du paramètre utile correspondant à la meilleure qualité de transmission du signal utile, parmi lesdites valeurs du paramètre utile mesurées, dite extremum local ;

- lorsque cet extremum local ne correspond pas à la composante continue initiale, poursuite de l'ajustement, en augmentant (1340) la composante continue si l'extremum local correspond à la composante continue initiale plus ledit incrément, ou en diminuant (1360) la composante continue si l'extremum local correspond à la composante continue initiale moins ledit incrément.

10. Procédé d'augmentation de la qualité de transmission d'un signal pour optimiser un débit de données, dans un système de communication sans fil (1000) comprenant une diode électroluminescente (1001) formant des moyens d'émission adaptés à émettre dans la partie visible du spectre électromagnétique, ladite diode électroluminescente (1001) étant alimentée par un signal d'alimentation comprenant une composante continue ($U_E$) et une composante alternative, le procédé comprenant les étapes suivantes :

- fixation (1401) d'une amplitude de modulation ($U_M$) de la composante alternative du signal d'alimentation ; et

- ajustement (1402) de la composante continue du signal d'alimentation, à partir d'une mesure d'un paramètre dit utile, représentatif de la qualité de transmission d'un signal dit utile, le signal utile correspondant à un signal lumineux émis par la diode électroluminescente (1001) et reçu par un photodétecteur (1003) formant des moyens de réception du système de communication sans fil ;

**caractérisé par** une étape de comparaison (1403) entre l'amplitude de modulation ($U_M$) du signal d'alimentation, et une deuxième valeur d'inversion ($U_{Minv}$) séparant deux comportements de la diode électroluminescente (1001) :

- un premier comportement tel que l'évolution de la valeur du paramètre utile traduit une amélioration de la qualité de transmission du signal utile, lorsque la composante continue du signal d'alimentation augmente ; et

- un second comportement tel que l'évolution de la valeur du paramètre utile traduit une diminution de la qualité de transmission du signal utile, lorsque la composante continue du signal d'alimentation augmente ;

l'ajustement (1402) de de la composante continue du signal d'alimentation mettant en oeuvre au moins un incrément positif (1440) ou négatif (1460) selon que la diode électroluminescente (1001) présente le premier ou le second comportement.

11. Module d'optimisation (100) adapté à mettre en oeuvre un procédé selon à la revendication 1, **caractérisé en ce qu'**il comprend :

- un variateur d'intensité (101A), agencé pour fixer la valeur de la composante continue ($U_E$) du signal d'alimentation de la diode électroluminescente ;

- des moyens de traitement du signal (102), adaptés à mesurer la valeur du paramètre utile (SNR) ;

- des moyens de commande (104A), agencés pour modifier l'amplitude de modulation de la composante alternative du signal d'alimentation de la diode électroluminescente ; et

- des moyens d'ajustement (103) recevant en entrée la valeur du paramètre utile, et adaptés à piloter les moyens de commande (104A) pour modifier l'amplitude de modulation, de façon à modifier la valeur du paramètre utile dans le sens d'une amélioration de la qualité de transmission du signal utile, par un procédé d'ajustement (402) selon la revendication 1.

12. Module d'optimisation (100) adapté à mettre en oeuvre un procédé selon à la revendication 2, **caractérisé en ce qu'**il comprend :

- un variateur d'intensité (101A), agencé pour fixer la valeur de la composante continue ($U_E$) du signal d'alimentation de la diode électroluminescente ;

- des moyens de traitement du signal (102), adaptés à mesurer la valeur du paramètre utile (SNR) ;

- des moyens de commande (104A), agencés pour modifier l'amplitude de modulation de la composante alternative du signal d'alimentation de la diode électroluminescente ; et

- des moyens d'ajustement (103) recevant en entrée la valeur du paramètre utile, et adaptés à piloter les moyens de commande (104A) pour modifier l'amplitude de modulation, de façon à modifier la valeur du paramètre utile dans le sens d'une amélioration de la qualité de transmission du signal utile, par un procédé d'ajustement (502) selon la revendication 2,

le module d'optimisation (100) comprenant en outre des moyens de comparaison (106) entre la composante continue (U$_E$) du signal d'alimentation de la diode électroluminescente, et une première valeur d'inversion (U$_{Einv}$) séparant deux comportements de la diode électroluminescente :

- un premier comportement tel que l'évolution de la valeur du paramètre utile traduit une amélioration de la qualité de transmission du signal utile, lorsque l'amplitude de modulation augmente ; et
- un second comportement tel que l'évolution de la valeur du paramètre utile traduit une diminution de la qualité de transmission du signal utile, lorsque l'amplitude de modulation augmente.

13. Système de communication sans fil (1000) comprenant une diode électroluminescente (1001) formant des moyens d'émission adaptés à émettre dans la partie visible du spectre électromagnétique, et un photodétecteur (1003) formant des moyens de réception, ladite diode électroluminescente (1001) étant alimentée par un signal d'alimentation comprenant une composante continue et une composante alternative, **caractérisé en ce qu'**il comprend en outre un module d'optimisation (100) selon la revendication 11 ou 12.

14. Module d'optimisation (200) adapté à mettre en oeuvre un procédé selon la revendication 9 ou 10, **caractérisé en ce qu'**il comprend :

- un variateur (204A) d'amplitude de modulation, agencé pour fixer l'amplitude de modulation de la composante alternative du signal d'alimentation de la diode électroluminescente ;
- des moyens de traitement du signal (202), adaptés à mesurer la valeur du paramètre utile (SNR) ;
- des moyens de commande (201A), agencés pour modifier la composante continue du signal d'alimentation de la diode électroluminescente ; et
- des moyens d'ajustement (203) recevant en entrée la valeur du paramètre utile, et pilotant les moyens de commande (201A) pour modifier la composante continue du signal d'alimentation, de façon à modifier la valeur du paramètre utile dans le sens d'une amélioration de la qualité de transmission du signal utile, par un procédé d'ajustement (1302 ; 1402) selon la revendication 9 ou 10.

15. Système de communication sans fil (2000) comprenant une diode électroluminescente (2001) formant des moyens d'émission adaptés à émettre dans la partie visible du spectre électromagnétique, et un photodétecteur (2003) formant des moyens de réception, ladite diode électroluminescente (2001) étant alimentée par un signal d'alimentation comprenant une composante continue et une composante alternative, **caractérisé en ce qu'**il comprend en outre un module d'optimisation (200) selon la revendication 14.

**Patentansprüche**

1. Verfahren zum Erhöhen der Übertragungsqualität eines Signals zwecks Optimierung einer Datenrate in einem drahtlosen Kommunikationssystem (1000), das eine Leuchtdiode (1001) enthält, die eine Emissionseinrichtung bildet, die dazu geeignet ist, im sichtbaren Bereich des elektromagnetischen Spektrums zu emittieren, wobei die Leuchtdiode (1001) mit einem Versorgungssignal gespeist wird, das eine Gleichkomponente (U$_E$) und eine Wechselkomponente enthält, wobei das Verfahren die nachstehenden Schritte umfasst:

- Festlegen (401) eines Wertes der Gleichkomponente (U$_E$) des Versorgungssignals;
- Einstellen (402) einer Modulationsamplitude der Wechselkomponente des Versorgungssignals ausgehend von einer Messung eines sogenannten Nutzparameters, der repräsentativ für die Übertragungsqualität eines sogenannten Nutzsignals ist, wobei das Nutzsignal einem Lichtsignal entspricht, das von der Leuchtdiode (1001) emittiert wird und von einem Photodetektor (1003) empfangen wird, der eine Empfangseinrichtung des drahtlosen Kommunikationssystems bildet;

**dadurch gekennzeichnet, dass** das Einstellen (402) einer Modulationsamplitude die nachstehenden Schritte umfasst:

- einen anfänglichen Messschritt (410) zum Messen der Werte des Nutzparameters (SNR0, SNR1, SNR2), die bei einer anfänglichen Modulationsamplitude (U$_0$), bei dieser anfänglichen Modulationsamplitude plus ein Modulationsamplitudeninkrement (U$_0$+P) und bei dieser anfänglichen Modulationsamplitude minus dieses Inkrement (U$_0$-P) erhaltenen werden;
- Suchen (430), unter den Messwerten des Nutzparameters, nach dem Wert des Nutzparameters welcher der besten Übertragungsqualität des Nutzsignals entspricht, der lokales Extremum genannt ist ;
- wenn dieses lokale Extremum nicht der anfänglichen Modulationsamplitude entspricht, Fortsetzen der Einstellung, indem die Modulationsamplitude erhöht wird (440), wenn das lokale Extremum der anfänglichen Modulationsamplitude plus dem Inkrement entspricht, oder indem die Modulationsamplitude verringert wird (460), wenn das lokale Extremum der anfänglichen Modulationsamplitude minus dem Inkrement entspricht.

2. Verfahren zum Erhöhen der Übertragungsqualität eines Signals zwecks Optimierung einer Datenrate in einem drahtlosen Kommunikationssystem (1000), das eine Leuchtdiode (1001) enthält, die eine Emissionseinrichtung bildet, die dazu geeignet ist, im sichtbaren Bereich des elektromagnetischen Spektrums zu emittieren, wobei die Leuchtdiode (1001) mit einem Versorgungssignal gespeist wird, das eine Gleichkomponente ($U_E$) und eine Wechselkomponente enthält, wobei das Verfahren die nachstehenden Schritte umfasst:

   - Festlegen (401) eines Wertes der Gleichkomponente ($U_E$) des Versorgungssignals;
   - Einstellen (502) einer Modulationsamplitude der Wechselkomponente des Versorgungssignals ausgehend von einer Messung eines sogenannten Nutzparameters, der repräsentativ für die Übertragungsqualität eines sogenannten Nutzsignals ist, wobei das Nutzsignal einem Lichtsignal entspricht, das von der Leuchtdiode (1001) emittiert wird und von einem Photodetektor (1003) empfangen wird, der eine Empfangseinrichtung des drahtlosen Kommunikationssystems bildet;

**gekennzeichnet durch** einen Schritt des Vergleichens (503) zwischen der Gleitkomponente ($U_E$) des Versorgungssignals und einem ersten Umkehrwert ($U_{Einv}$), der zwei Verhaltensweisen der Leuchtdiode (1001) trennt:

   - eine erste Verhaltensweise derart, dass der Verlauf des Werts des Nutzparameters eine Verbesserung der Übertragungsqualität des Nutzsignals widerspiegelt, wenn die Modulationsamplitude zunimmt; und
   - eine zweite Verhaltensweise derart, dass der Verlauf des Werts des Nutzparameters eine Abnahme der Übertragungsqualität des Nutzsignals widerspiegelt, wenn die Modulationsamplitude zunimmt;

wobei das Einstellen (502) der Modulationsamplitude zumindest ein positives Inkrement (440) oder negatives Inkrement (460) implementiert, je nachdem, ob die Leuchtdiode (1001) die erste oder die zweite Verhaltensweise aufweist.

3. Verfahren nach Anspruch 2, **gekennzeichnet durch** einen anfänglichen Schritt des Bestimmens des ersten Umkehrwerts ($U_{Einv}$).

4. Verfahren nach Anspruch 3, **dadurch gekennzeichnet, dass** das Bestimmen des ersten Umkehrwerts ($U_{Einv}$) Messungen von Impedanzspektren (61) der Leuchtdiode (1001) bei unterschiedlichen Werten der Gleichkomponente ($U_E$) des Versorgungssignals umfasst, wobei der erste Umkehrwert ($U_{Einv}$) zwei Verhaltensweisen der Leuchtdiode trennt:

   - eine erste Verhaltensweise derart, dass der Radius des Impedanzspektrums (61) mit der Modulationsamplitude zunimmt; und
   - eine zweite Verhaltensweise derart, dass der Radius des Impedanzspektrums (61) dann zunimmt, wenn die Modulationsamplitude abnimmt.

5. Verfahren nach Anspruch 3, **dadurch gekennzeichnet, dass** das Bestimmen des ersten Umkehrwerts ($U_{Einv}$) eine Suche nach dem Schnittpunkt (81) von mehreren Kurven (80) umfasst, welche den äquivalenten Widerstand ($R_p$) der Leuchtdiode (1001) in Abhängigkeit von der Gleichkomponente ($U_E$) ihres Versorgungssignals darstellen.

6. Verfahren nach Anspruch 3, **dadurch gekennzeichnet, dass** das Bestimmen des ersten Umkehrwerts ($U_{Einv}$) eine Suche nach dem Wendepunkt (91) an einer Kurve (90) umfasst, welche repräsentativ ist für den Logarithmus der Stärke des durch die Leuchtdiode (1001) fließenden Stroms in Abhängigkeit von einer Versorgungsgleichspannung.

7. Verfahren nach einem der Ansprüche 1 bis 6, **dadurch gekennzeichnet, dass** das Einstellen mit aufeinanderfolgenden Inkrementen erfolgt.

8. Verfahren nach einem der Ansprüche 1 bis 7, **dadurch gekennzeichnet, dass** der für die Übertragungsqualität des Nutzsignals repräsentative Parameter ein Signal-Rausch-Verhältnis oder eine Bitfehlerrate oder eine Paketfehlerrate oder eine Rahmenfehlerrate ist.

9. Verfahren zum Erhöhen der Übertragungsqualität eines Signals zwecks Optimierung einer Datenrate in einem drahtlosen Kommunikationssystem (1000), das eine Leuchtdiode (1001) enthält, die eine Emissionseinrichtung bildet, die dazu geeignet ist, im sichtbaren Bereich des elektromagnetischen Spektrums zu emittieren, wobei die Leuchtdiode (1001) mit einem Versorgungssignal gespeist wird, das eine Gleichkomponente ($U_E$) und eine Wechselkomponente enthält, wobei das Verfahren die nachstehenden Schritte umfasst:

   - Festlegen (1301) einer Modulationsamplitude ($U_M$) der Wechselkomponente des Versorgungssignals; und

- Einstellen (1302) der Gleichkomponente des Versorgungssignals ausgehend von einer Messung eines sogenannten Nutzparameters, der repräsentativ für die Übertragungsqualität eines sogenannten Nutzsignals ist, wobei das Nutzsignal einem Lichtsignal entspricht, das von der Leuchtdiode (1001) emittiert wird und von einem Photodetektor (1003) empfangen wird, der eine Empfangseinrichtung des drahtlosen Kommunikationssystems bildet;

**dadurch gekennzeichnet, dass** das Einstellen (1302) der Gleichkomponente des Versorgungssignals die nachstehenden Schritte umfasst:

- einen anfänglichen Messschritt (1310) zum Messen der Werte des Nutzparameters, die bei einer anfänglichen Gleichkomponente, bei dieser Gleichkomponente plus ein Gleichkomponenteninkrement und bei dieser anfänglichen Gleichkomponente minus dieses Inkrement erhaltenen werden;
- Suchen (1330), unten den Messwerten des Nutzparameters, nach dem Wert des Nutzparameters welcher der besten Übertragungsqualität des Nutzsignals entspricht, der lokales Extremum genannt ist;
- wenn dieses lokale Extremum nicht der anfänglichen Gleichkomponente entspricht, Fortsetzen der Einstellung, indem die Gleichkomponente erhöht wird (1340), wenn das lokale Extremum der anfänglichen Gleichkomponente plus dem Inkrement entspricht, oder indem die Gleichkomponente verringert wird (1360), wenn das lokale Extremum der anfänglichen Gleichkomponente minus dem Inkrement entspricht.

10. Verfahren zum Erhöhen der Übertragungsqualität eines Signals zwecks Optimierung einer Datenrate in einem drahtlosen Kommunikationssystem (1000), das eine Leuchtdiode (1001) enthält, die eine Emissionseinrichtung bildet, die dazu geeignet ist, im sichtbaren Bereich des elektromagnetischen Spektrums zu emittieren, wobei die Leuchtdiode (1001) mit einem Versorgungssignal gespeist wird, das eine Gleichkomponente ($U_E$) und eine Wechselkomponente enthält, wobei das Verfahren die nachstehenden Schritte umfasst:

- Festlegen (1401) einer Modulationsamplitude ($U_M$) der Wechselkomponente des Versorgungssignals; und
- Einstellen (1402) der Gleichkomponente des Versorgungssignals ausgehend von einer Messung eines sogenannten Nutzparameters, der repräsentativ für die Übertragungsqualität eines sogenannten Nutzsignals ist, wobei das Nutzsignal einem Lichtsignal entspricht, das von der Leuchtdiode (1001) emittiert wird und von einem Photodetektor (1003) empfangen wird, der eine Empfangseinrichtung des drahtlosen Kommunikationssystems bildet;

**gekennzeichnet durch** einen Schritt des Vergleichens (1403) zwischen der Modulationsamplitude ($U_M$) des Versorgungssignals und einem zweiten Umkehrwert ($U_{Minv}$), der zwei Verhaltensweisen der Leuchtdiode (1001) trennt:

- eine erste Verhaltensweise derart, dass der Verlauf des Werts des Nutzparameters eine Verbesserung der Übertragungsqualität des Nutzsignals widerspiegelt, wenn die Gleichkomponente des Versorgungssignals zunimmt; und
- eine zweite Verhaltensweise derart, dass der Verlauf des Werts des Nutzparameters eine Abnahme der Übertragungsqualität des Nutzsignals widerspiegelt, wenn die Gleichkomponente des Versorgungssignals zunimmt;

wobei das Einstellen (1402) der Gleichkomponente des Versorgungssignals zumindest ein positives Inkrement (1440) oder negatives Inkrement (1460) implementiert, je nachdem, ob die Leuchtdiode (1001) die erste oder die zweite Verhaltensweise aufweist.

11. Optimierungsmodul (100), das dazu geeignet ist, ein Verfahren nach Anspruch 1 durchzuführen, **dadurch gekennzeichnet, dass** es enthält:

- einen Stärkenregler (101A), der dazu angeordnet ist, um den Wert der Gleichskomponente ($U_E$) des Versorgungssignals der Leuchtdiode festzulegen;
- Signalverarbeitungseinrichtungen (102), die dazu geeignet sind, den Wert des Nutzparameters (SNR) zu messen;
- Steuereinrichtungen (104A), die dazu angeordnet sind, um die Modulationsamplitude der Wechselkomponente des Versorgungssignals der Leuchtdiode zu ändern; und
- Einstelleinrichtungen (103), die am Eingang den Wert des Nutzparameters empfangen und dazu geeignet sind, die Steuereinrichtungen (104A) ansteuern, um die Modulationsamplitude zu ändern, so dass der Wert des Nutzparameters im Sinne einer Verbesserung der Übertragungsqualität des Nutzsignals durch ein Einstellverfahren (402) nach Anspruch 1 verändert wird.

12. Optimierungsmodul (100), das dazu geeignet ist, ein Verfahren nach Anspruch 2 durchzuführen, **dadurch gekennzeichnet, dass** es enthält:

- einen Stärkenregler (101A), der dazu angeordnet ist, um den Wert der Gleichkomponente ($U_E$) des Versorgungssignals der Leuchtdiode festzulegen;

- Signalverarbeitungseinrichtungen (102), die dazu geeignet sind, den Wert des Nutzparameters (SNR) zu messen;

- Steuereinrichtungen (104A), die dazu angeordnet sind, um die Modulationsamplitude der Wechselkomponente des Versorgungssignals der Leuchtdiode zu ändern; und

- Einstelleinrichtungen (103), die am Eingang den Wert des Nutzparameters empfangen und dazu geeignet sind, die Steuereinrichtungen (104A) ansteuern, um die Modulationsamplitude zu ändern, so dass der Wert des Nutzparameters im Sinne einer Verbesserung der Übertragungsqualität des Nutzsignals durch ein Einstellverfahren (502) nach Anspruch 2 verändert wird,

wobei das Optimierungsmodul (100) ferner Vergleichseinrichtungen (106) enthält, zum Vergleichen zwischen der Gleichkomponente ($U_E$) des Versorgungssignals der Leuchtdiode und einem ersten Umkehrwert ($U_{Einv}$) der zwei Verhaltensweisen der Leuchtdiode (1001) trennt:

- eine erste Verhaltensweise derart, dass der Verlauf des Werts des Nutzparameters eine Verbesserung der Übertragungsqualität des Nutzsignals widerspiegelt, wenn die Modulationsamplitude zunimmt; und
- eine zweite Verhaltensweise derart, dass der Verlauf des Werts des Nutzparameters eine Abnahme der Übertragungsqualität des Nutzsignals widerspiegelt, wenn die Modulationsamplitude zunimmt.

**13.** Drahtloses Kommunikationssystem (1000), enthaltend eine Leuchtdiode (1001), die eine Emissionseinrichtung bildet, die dazu geeignet ist, im sichtbaren Bereich des elektromagnetischen Spektrums zu emittieren, sowie einen Photodetektor (1003), der eine Empfangseinrichtung bildet, wobei die Leuchtdiode (1001) mit einem Versorgungssignal gespeist wird, das eine Gleichkomponente und eine Wechselkomponente enthält, **dadurch gekennzeichnet, dass** es ferner ein Optimierungsmodul (100) nach Anspruch 11 oder 12 enthält.

**14.** Optimierungsmodul (200), das dazu geeignet ist, ein Verfahren nach Anspruch 9 oder 10 durchzuführen, **dadurch gekennzeichnet, dass** es enthält:

- einen Modulationsamplitudenregler (201A), der dazu angeordnet ist, um die Modulationsamplitude der Wechselkomponente des Versorgungssignals der Leuchtdiode festzulegen;

- Signalverarbeitungseinrichtungen (202), die dazu geeignet sind, den Wert des Nutzparameters (SNR) zu messen;

- Steuereinrichtungen (201A), die dazu angeordnet sind, um die Modulationsamplitude der Gleichkomponente des Versorgungssignals der Leuchtdiode zu ändern; und

- Einstelleinrichtungen (203), die am Eingang den Wert des Nutzparameters empfangen und die die Steuereinrichtungen (201A) ansteuern, um die Gleichkomponente des Versorgungssignals zu ändern, so dass der Wert des Nutzparameters im Sinne einer Verbesserung der Übertragungsqualität des Nutzsignals durch ein Einstellverfahren (1302; 1402) nach Anspruch 9 oder 10 verändert wird.

**15.** Drahtloses Kommunikationssystem (2000), enthaltend eine Leuchtdiode (2001), die eine Emissionseinrichtung bildet, die dazu geeignet ist, im sichtbaren Bereich des elektromagnetischen Spektrums zu emittieren, sowie einen Photodetektor (2003), der eine Empfangseinrichtung bildet, wobei die Leuchtdiode (2001) mit einem Versorgungssignal gespeist wird, das eine Gleichkomponente und eine Wechselkomponente enthält, **dadurch gekennzeichnet, dass** es ferner ein Optimierungsmodul (200) nach Anspruch 14 enthält.

**Claims**

**1.** A method for improving the transmission quality of a signal in order to optimize a data rate, in a wireless communication system (1000) comprising a light-emitting diode (1001) forming emitting means adapted to emit in the visible part of the electromagnetic spectrum, said light-emitting diode (1001) being supplied with a supply signal comprising a direct component ($U_E$) and an alternative component, the method comprising the following steps of:

- setting (401) a value of the direct component ($U_E$) of the supply signal;
- adjusting (402) a modulation amplitude of the alternative component of the supply signal, from a measurement of a so-called useful parameter, representative of the transmission quality of a so-called useful signal, the useful signal corresponding to a light signal emitted by the light-emitting diode (1001) and received by a photodetector (1003) forming receiving means of the wireless communication system;

**characterized in that** the adjusting (402) of a modulation amplitude comprises the following steps:

- an initial step of measuring (410) values of the useful parameter (SNR0, SNR1, SNR2) obtained for an initial modulation amplitude ($U_0$), for this initial modulation amplitude plus a modulation amplitude increment ($U_0$+P), and for this initial modulation amplitude minus said increment ($U_0$-P);

- searching (430) for the value of the useful parameter corresponding to the best transmission quality of the useful signal, among said values of the useful parameter which are measured, called a local extremum;

- when this local extremum does not correspond to the initial modulation amplitude, continuing adjusting, by increasing (440) the modulation amplitude if the local extremum corresponds to the initial modulation amplitude plus said increment, or by decreasing (460) the modulation amplitude if the local extremum corresponds to the initial modulation amplitude minus said increment.

2. A method for improving the transmission quality of a signal in order to optimize a data rate, in a wireless communication system (1000) comprising a light-emitting diode (1001) forming emitting means adapted to emit in the visible part of the electromagnetic spectrum, said light-emitting diode (1001) being supplied with a supply signal comprising a direct component ($U_E$) and an alternative component, the method comprising the following steps of:

   - setting (401) a value of the direct component ($U_E$) of the supply signal;
   - adjusting (502) a modulation amplitude of the alternative component of the supply signal, from a measurement of a so-called useful parameter, representative of the transmission quality of a so-called useful signal, the useful signal corresponding to a light signal emitted by the light-emitting diode (1001) and received by a photodetector (1003) forming receiving means of the wireless communication system;

   **characterized by** a step of comparing (503) the direct component ($U_E$) of the supply signal with a first reversal value ($U_{Einv}$) separating two behaviours of the light-emitting diode (1001):

   - a first behaviour such that the evolution of the value of the useful parameter reflects an improvement in the transmission quality of the useful signal, when the modulation amplitude increases; and
   - a second behaviour such that the evolution of the value of the useful parameter reflects a decrease in the transmission quality of the useful signal, when the modulation amplitude increases;

wherein the adjustment (502) of the modulation amplitude implements at least one positive (440) or negative (460) increment according to whether the light-emitting diode (1001) has the first or the second behaviour.

3. The method according to claim 2, **characterized by** an initial step of determining the first reversal value ($U_{Einv}$).

4. The method according to claim 3, **characterized in that** determining the first reversal value ($U_{Einv}$) implements measurements of impedance spectra (61) of the light-emitting diode (1001), for different values of the direct component ($U_E$) of the supply signal, the first reversal value ($U_{Einv}$) separating two behaviours of the light-emitting diode (1001):

   - a first behaviour such that the radius of the impedance spectrum (61) increases with the modulation amplitude; and
   - a second behaviour such that the radius of the impedance spectrum (61) increases when the modulation amplitude decreases.

5. The method according to claim 3, **characterized in that** determining the first reversal value ($U_{Einv}$) implements searching for the point of intersection (81) of several curves (80) representing the equivalent resistance ($R_p$) of the light-emitting diode (1001) as a function of the direct component ($U_E$) of its supply signal.

6. The method according to claim 3, **characterized in that** determining the first reversal value ($U_{Einv}$) implements searching for a point of inflexion (91) on a curve (90) representative of the logarithm of the intensity of the current flowing through the light-emitting diode (1001) as a function of a direct supply voltage.

7. The method according to any of claims 1 to 6, **characterized in that** the adjustment is made by successive increments.

8. The method according to any of claims 1 to 7, **characterized in that** the parameter representative of the transmission quality of the useful signal is a signal-to-noise ratio or a bit error rate, or a packet error rate or a frame error rate.

9. A method for improving the transmission quality of a signal in order to optimize a data rate, in a wireless communication system (1000) comprising a light-emitting diode (1001) forming emitting means adapted to emit in the visible part of the electromagnetic spectrum, said light-emitting diode (1001) being supplied with a supply signal comprising a direct component ($U_E$) and an alternative component, the method comprising the following steps of:

- setting (1301) a modulation amplitude ($U_M$) of the alternative component of the supply signal; and
- adjusting (1302) the direct component of the supply signal, from a measurement of a so-called useful parameter, representative of the transmission quality of a so-called useful signal, the useful signal corresponding to a light signal emitted by the light-emitting diode (1001) and received by a photodetector (1003) forming receiving means of the wireless communication system;

**characterized in that** the adjusting (1302) of the direct component of the supply signal comprises the following steps:

- an initial step of measuring (1310) values of the useful parameter obtained for an initial direct component, for this initial direct component plus a direct component increment, and for this initial direct component minus said increment;
- searching (1330) for the value of the useful parameter corresponding to the best transmission quality of the useful signal, among said values of the useful parameter which are measured, called a local extremum;
- when this local extremum does not correspond to the initial direct component, continuing adjusting, by increasing (1340) the direct component if the local extremum corresponds to the initial direct component plus said increment, or by decreasing (1360) the direct component if the local extremum corresponds to the initial direct component minus said increment.

10. A method for improving the transmission quality of a signal in order to optimize a data rate, in a wireless communication system (1000) comprising a light-emitting diode (1001) forming emitting means adapted to emit in the visible part of the electromagnetic spectrum, said light-emitting diode (1001) being supplied with a supply signal comprising a direct component ($U_E$) and an alternative component, the method comprising the following steps of:

- setting (1401) a modulation amplitude ($U_M$) of the alternative component of the supply signal; and
- adjusting (1402) the direct component of the supply signal, from a measurement of a so-called useful parameter, representative of the transmission quality of a so-called useful signal, the useful signal corresponding to a light signal emitted by the light-emitting diode (1001) and received by a photodetector (1003) forming receiving means of the wireless communication system;

**characterized by** a step of comparing (1403) the modulation amplitude ($U_M$) of the supply signal with a second reversal value ($U_{Minv}$) separating two behaviours of the light-emitting diode (1001):

- a first behaviour such that the evolution of the value of the useful parameter reflects an improvement in the transmission quality of the useful signal, when the direct component of the supply signal increases; and
- a second behaviour such that the evolution of the value of the useful parameter reflects a decrease in the transmission quality of the useful signal, when the direct component of the supply signal increases;

wherein the adjustment (1402) of the direct component of the supply signal implements at least one positive (1440) or negative (1460) increment according to whether the light-emitting diode (1001) has the first or the second behaviour.

11. An optimization module (100) suitable for implementing a method according to claim 1, **characterized in that** it comprises:

- an intensity controller (101A), arranged to set the value of the direct component ($U_E$) of the supply signal of the light-emitting diode;
- signal processing means (102), suitable for measuring the value of the useful parameter (SNR);
- control means (104A), arranged to modify the modulation amplitude of the alternative component of the supply signal of the light-emitting diode; and
- adjusting means (103) receiving, as an input, the value of the useful parameter, and driving the control means (104A) to modify the modulation amplitude, so as to modify the value of the useful parameter for the purpose of improving the transmission quality of the useful signal using an adjusting method (402) according to claim 1.

12. An optimization module (100) suitable for implementing a method according to claim 2, **characterized in that** it comprises:

- an intensity controller (101A), arranged to set the value of the direct component ($U_E$) of the supply signal of the light-emitting diode;

- signal processing means (102), suitable for measuring the value of the useful parameter (SNR);

- control means (104A), arranged to modify the modulation amplitude of the alternative component of the supply signal of the light-emitting diode; and

- adjusting means (103) receiving, as an input, the value of the useful parameter, and driving the control means (104A) to modify the modulation amplitude, so as to modify the value of the useful parameter for the purpose of improving the transmission quality of the useful signal using an adjusting method (502) according to claim 2,

wherein the optimization module (100) further comprises means for comparing (106) the direct component ($U_E$) of the supply signal of the light-emitting diode with a first reversal value ($U_{Einv}$) separating two behaviours of the light-emitting diode:

- a first behaviour such that the evolution of the value of the useful parameter reflects an improvement in the transmission quality of the useful signal, when the modulation amplitude increases; and
- a second behaviour such that the evolution of the value of the useful parameter reflects a decrease in the transmission quality of the useful signal, when the modulation amplitude increases.

13. A wireless communication system (1000) comprising a light-emitting diode (1001) forming emitting means adapted to emit in the visible part of the electromagnetic spectrum, and a photodetector (1003) forming receiving means, said light-emitting diode (1001) being supplied with a supply signal comprising a direct component and an alternative component, **characterized in that** it further comprises an optimization module (100) according to claim 11 or 12.

14. An optimization module (200) suitable for implementing a method according to claim 9 or 12, **characterized in that** it comprises:

- a modulation amplitude controller (204A), arranged to set the modulation amplitude of the alternative component of the supply signal of the light-emitting diode;
- signal processing means (202), suitable for measuring the value of the useful parameter (SNR);
- control means (201A), arranged to modify the direct component of the supply signal of the light-emitting diode; and

- adjusting means (203) receiving, as an input, the value of the useful parameter, and driving the control means (201A) to modify the direct component of the supply signal, so as to modify the value of the useful parameter for the purpose of improving the transmission quality of the useful signal using an adjusting method (1302; 1402) according to claim 9 or 10.

15. A wireless communication system (2000) comprising a light-emitting diode (2001) forming emitting means adapted to emit in the visible part of the electromagnetic spectrum, and a photodetector (2003) forming receiving means, said light-emitting diode (2001) being supplied with a supply signal comprising a direct component and an alternative component, **characterized in that** it further comprises an optimization module (200) according to claim 14.

FIG.1

FIG.2

FIG.3

$U_E$

401

402

$SNR_0=SNR(U_0)$
$SNR_1=SNR(U_1=U_0+P)$
$SNR_2=SNR(U_2=U_0-P)$

410

MAX $(SNR_0; SNR_1; SNR_2)$

430

440

450

460

$U_3=U_1+P$
$SNR_3=SNR(U_3)$

$U_4=U_2-P$
$SNR_4=SNR(U_4)$

441

461

MAX $(SNR_3; SNR_1)$

MAX $(SNR_4; SNR_2)$

442

443

462

463

$U_3=>U_1$
$SNR_3=>SNR_1$

$U_4=>U_2$
$SNR_4=>SNR_2$

FIG. 4

$U_E$ | 401

$U_E$; $U_{Einv}$ | 503 | 502

440     450     460

$U_3 = U_1 + P$
$SNR_3 = SNR(U_3)$

$U_4 = U_2 - P$
$SNR_4 = SNR(U_4)$

441         461

MAX $(SNR_3; SNR_1)$     MAX $(SNR_4; SNR_2)$

442    443       462    463

$U_3 \Rightarrow U_1$
$SNR_3 \Rightarrow SNR_1$

$U_4 \Rightarrow U_2$
$SNR_4 \Rightarrow SNR_2$

FIG. 5

FIG.6A

FIG.6B

FIG.6C

FIG.6D

FIG. 7

FIG.8

FIG.9

FIG.10

FIG.11

FIG.12

FIG. 13

$U_M$ | 1401

1402

$U_M$; $U_{Minv}$ | 1403

1440

1450

1460

1441

1461

1442

1443

1462

1463

# FIG. 14

2002

2000

2001

2003

205

AC+DC

201B

204B

DC

AC=$U_M$

203

SNR

201A

204A

200

202

# FIG.15

**EP 2 942 884 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- KR 20080064425

### Littérature non-brevet citée dans la description

- Modulation Categorization of Visible Light Communication. **HYUK-CHOON KWON et al.** IEEE 802.15. Samsung Electronics, Juillet 2008